# EUROPEAN PATENT SPECIFICATION

(11) **EP 4 044 639 B1**
(45) Date of publication and mention of the grant of the patent: **21.05.2025**
(21) Application number: 20883843.3
(22) Date of filing: 02.11.2020
(51) Int. Cl.: H04W 8/18, H04W 68/00, H04W 68/12, H04W 8/20, H04W 60/04, H04W 88/06

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 08.11.2019 CN 201911090556
(43) Date of publication of application: 17.08.2022
(73) Proprietor: Huawei Technologies Co., Ltd., Longgang District Shenzhen, Guangdong 518129 (CN)
(72) Inventor: JIN, Hui, Shenzhen, Guangdong 518129 (CN); CAI, Yu, Shenzhen, Guangdong 518129 (CN); YAO, Chuting, Shenzhen, Guangdong 518129 (CN)
(74) Representative: MERH-IP Matias Erny Reichl Hoffmann Patentanwälte PartG mbB
(86) International application number: PCT/CN2020/125918
(87) International publication number: WO 2021/088769

(56) References cited:
- WO-A1-2012/041663
- WO-A1-2012/081475
- WO-A1-2018/176675
- CN-A- 106 535 331
- CN-A- 109 315 017
- US-A1- 2013 316 718
- US-A1- 2015 023 258

## Description

### TECHNICAL FIELD

This application relates to the field of communications technologies, and in particular, to a communications method and apparatus.

### BACKGROUND

With development of communications technologies, dual-card terminal devices are widely used. The dual-card terminal device refers to a terminal device equipped with two telephone cards. The telephone card may be, but is not limited to, a subscriber identity module (subscriber identification module, SIM) card, a universal subscriber identity module (universal subscriber identity module, USIM) card, an embedded SIM (embedded SIM, eSIM) card, a soft SIM card, or the like. The dual-card terminal device may register with a network by using the two telephone cards.

Currently, in consideration of costs and power consumption, most dual-card terminal devices have only one transmit chain (transmit chain, Tx chain), in other words, two telephone cards of a terminal device share and preempt one transmit chain. For this type of terminal device, services cannot be performed simultaneously by using two telephone cards. To be specific, when the terminal device uses one telephone card to perform a service, the other telephone card needs to be disconnected from a network. This type of terminal device brings inconvenience to a user and affects user experience.

WO 2018/176675 A1 discloses a communication method for realising dual SIM dual active, wherien a terminal carries out voice communication through an SIM card.

WO 2012/041663 A1 discloses a method of operating a multiple SIM phone.

### SUMMARY

This application provides a communications method and apparatus, so that a dual-card terminal device simultaneously performs services by using two telephone cards

The invention is set out in the independent claims.

According to a first aspect, this application provides a communications method. The method is applicable to a communications apparatus that supports a SIM card 1 and a SIM card 2, the communications apparatus includes a first communications module SIM 1 and a second communications module SIM 2, the SIM 1 corresponds to the SIM card 1, the SIM 2 corresponds to the SIM card 2, and the method includes: when the SIM 1 is in a connected state, receiving a first paging notification message from a first mobility management entity through the SIM 1, where the first paging notification message includes an identifier of the SIM card 2; and sending a service request of the SIM card 2 and the identifier of the SIM card 2 to the first mobility management entity, where the first mobility management entity provides a service for the SIM card 1, and home public land mobile networks PLMNs of the SIM card 1 and the SIM card 2 are the same.

According to the foregoing method, a communications apparatus supporting two SIMs may be enabled to support the two SIMs in simultaneously transmitting and receiving data, which improves user experience.

In a possible design, the communications apparatus forwards the first paging notification message from the SIM 1 to the SIM 2, sends the service request from the SIM 2 to the SIM 1, and sends the service request and an identifier of the SIM 2 to the first mobility management entity through the SIM 1.

According to the foregoing method, data transmission of the SIM card 2 can be subsequently implemented through the SIM 1.

In a possible design, the communications apparatus sends a first registration request to the first mobility management entity through the SIM 1. The first registration request includes an identifier of the SIM card 1 and the identifier of the SIM card 2. In addition, the communications apparatus sends a second registration request to a second mobility management entity through the SIM 2. The second registration request includes the identifier of the SIM card 1 and the identifier of the SIM card 2. In this way, the SIM 1 can subsequently implement data transmission of the SIM 2.

In a possible design, the communications apparatus sends a first message to the first mobility management entity through the SIM 1. The first message includes a third registration request of the SIM card 2 and the identifier of the SIM card 2. The communications apparatus receives a second message from the first mobility management entity through the SIM 1. The second message indicates that registration of the SIM card 2 is completed. In this way, the SIM 1 can subsequently implement data transmission of the SIM 2.

According to a second aspect, this application provides a communications method. The method is applicable to a first mobility management entity, and the method includes: sending a first paging notification message to a first communications module SIM 1 of a communications apparatus, where the first paging notification message includes an identifier of a SIM card 2, the communications apparatus supports a SIM card 1 and the SIM card 2, the SIM 1 is in a connected state, and the first mobility management entity provides a service for the SIM card 1; and receiving a service request of the SIM card 2 and the identifier of the SIM card 2 from the communications apparatus, where home public land mobile networks PLMNs of the SIM card 1 and the SIM card 2 are the same.

According to the foregoing method, a communications apparatus supporting two SIMs may be enabled to support the two SIMs in simultaneously transmitting and receiving data, which improves user experience.

According to a third aspect, this application provides a communications method. The method is applicable to a communications apparatus, the communications apparatus supports a SIM card 1 and a SIM card 2, the communications apparatus includes a first communications module SIM 1 and a second communications module SIM 2, the SIM 1 corresponds to the SIM card 1, the SIM 2 supports the SIM card 2, and the method includes: when the SIM 1 is in a connected state, receiving a configuration of a first radio bearer from a first network device through the SIM 1, where the first radio bearer is used for data transmission of the SIM 2; and transmitting, through the SIM 1 and the first network device by using the first radio bearer, data belonging to the SIM 2, where home public land mobile networks PLMNs of the SIM card 1 and the SIM card 2 are the same.

According to the foregoing method, a communications apparatus supporting two SIMs may be enabled to support the two SIMs in simultaneously transmitting and receiving data, which improves user experience.

In a possible design, a specific method for transmitting, through the SIM 1 and the first network device by using the first radio bearer, data belonging to the SIM card 2 may be: The communications apparatus receives first data from the first network device through the SIM 1 by using the first bearer; determines that the first data belongs to the SIM card 2; and sends the first data from the SIM 1 to the SIM 2. In this way, downlink data of the SIM card 2 can be transmitted.

In a possible design, a specific method for transmitting, through the SIM 1 and the first network device by using the first radio bearer, data belonging to the SIM card 2 may be: obtaining second data through the SIM 2; determining, by using the SIM 1, the first radio bearer for transmitting the second data; and sending the second data to the first network device based on the first radio bearer through the SIM 1. In this way, uplink data of the SIM card 2 can be transmitted.

According to a fourth aspect, this application further provides a communications apparatus, and the communications apparatus has a function of implementing the communications apparatus in the method instances in the first aspect or the third aspect. The function may be implemented by hardware, or may be implemented by hardware executing corresponding software. The hardware or the software includes one or more modules corresponding to the functions.

In a possible design, a structure of the communications apparatus includes a SIM card 1, a SIM card 2, a processing unit, and a first communications module, and may further include a second communications module. These modules may perform corresponding functions in the method examples in the first aspect or the third aspect. For details, refer to detailed descriptions in the method examples. Details are not described herein again.

In a possible design, a structure of the communications apparatus includes a memory, a processor, a first communications module SIM 1, and a second communications module SIM 2. The processor is configured to support the communications apparatus in performing a corresponding function of the communications apparatus in the method in the first aspect or the third aspect. The memory is coupled to the processor, and stores program instructions and data that are necessary for the communications apparatus.

The following fifth aspect and the related possible designs are not covered by the claims.

According to a fifth aspect, this application further provides a first mobility management entity. The first mobility management entity has a function of implementing the first mobility management entity in the method instance in the second aspect. The function may be implemented by hardware, or may be implemented by hardware executing corresponding software. The hardware or the software includes one or more modules corresponding to the functions.

In a possible design, a structure of the first mobility management entity includes a processing unit and a communications unit. These units may perform corresponding functions in the method example in the second aspect. For details, refer to detailed descriptions in the method example. Details are not described herein again.

In a possible design, a structure of the first mobility management entity includes a transceiver and a processor, and may optionally further include a memory. The transceiver is configured to receive and send data (information, a signal, or the like), and communicate and interact with another device in a communications system. The processor is configured to support the first mobility management entity in performing a corresponding function of the first mobility management entity in the method in the second aspect. The memory is coupled to the processor, and stores program instructions and data that are necessary for the first mobility management entity.

According to a sixth aspect, this application further provides a communications system. The communications system includes at least one of the communications apparatus and the first mobility management entity that are mentioned in the foregoing designs.

According to a seventh aspect, this application provides a computer-readable storage medium. The computer-readable storage medium stores computer-executable instructions, and when being invoked by a computer, the computer-executable instructions are used to enable the computer to perform any one of the foregoing methods.

According to an eighth aspect, this application provides a computer program product including instructions. When the computer program product runs on a computer, the computer is enabled to perform any one of the foregoing methods.

According to a ninth aspect, this application provides a chip. The chip is coupled to a memory, and is configured to read and execute program instructions stored in the memory, to implement any one of the foregoing methods.

### BRIEF DESCRIPTION OF DRAWINGS

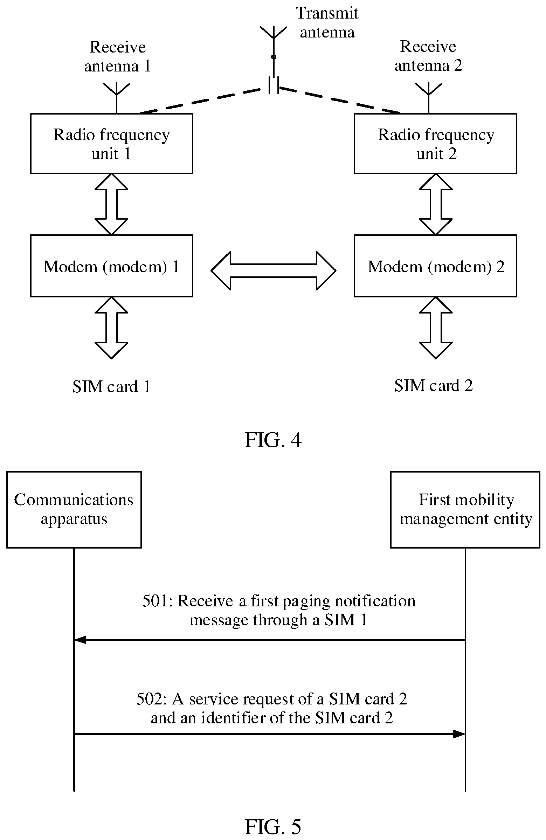

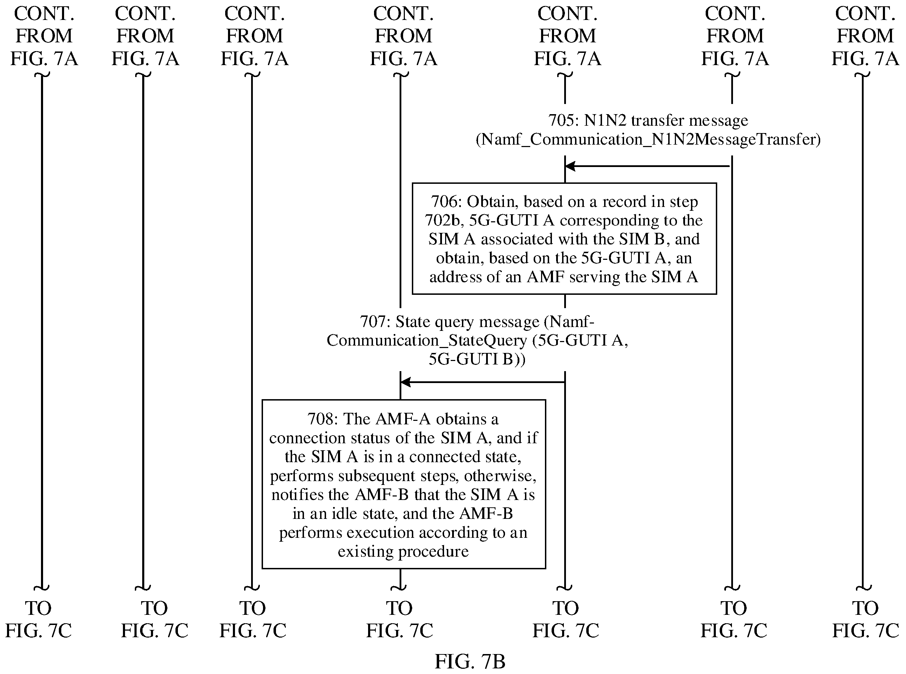

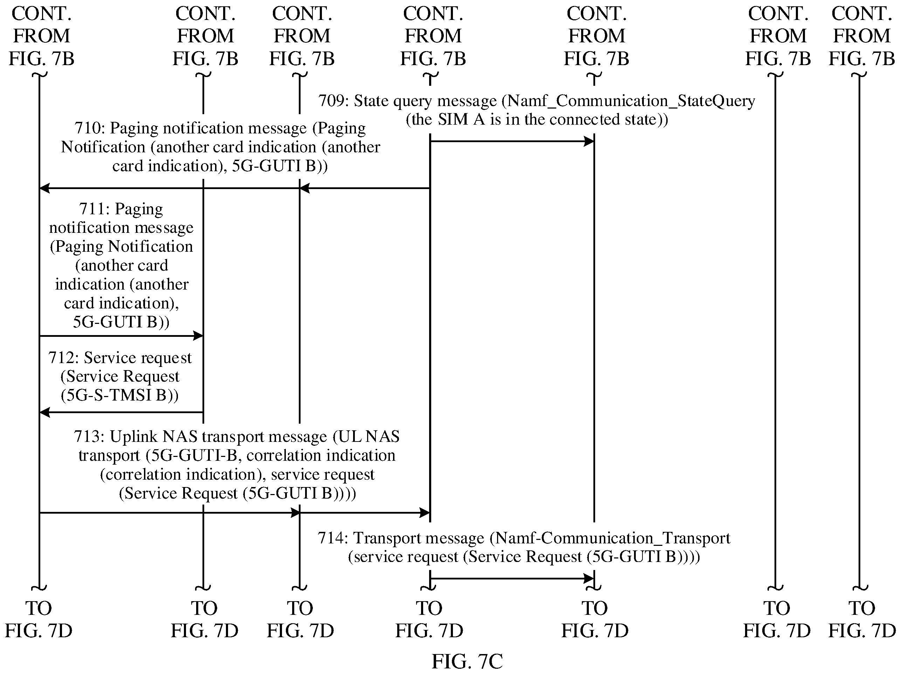

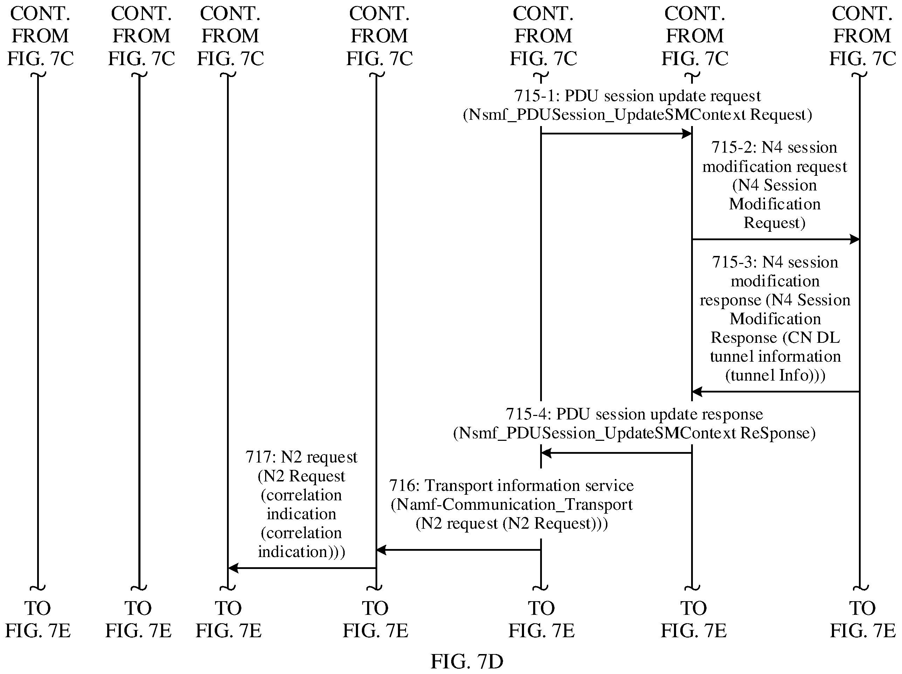

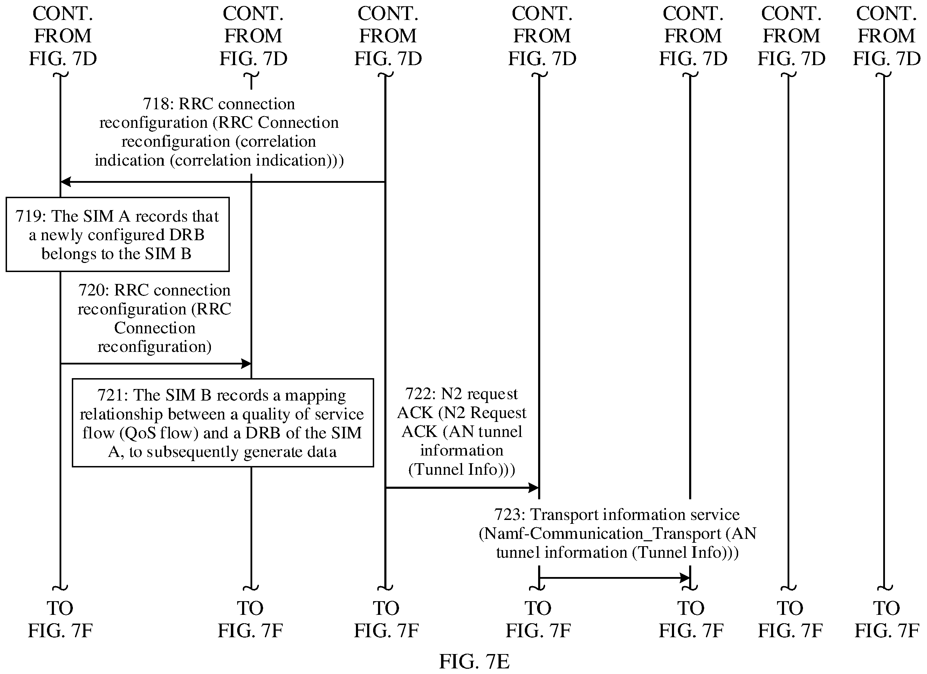

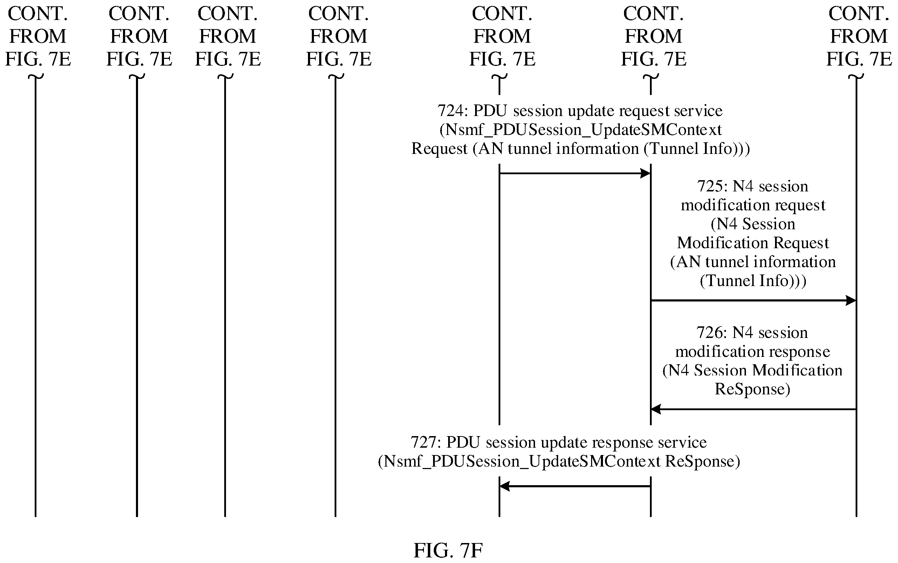

In the present application, the claimed invention has been described with particular reference to figures 5, 7b and 7c, while the description of the remaining figures has been provided for illustrative purposes for a better understanding of the invention.
FIG. 1 is a schematic diagram in which a terminal device supporting dual cards performs a service according to the conventional technology;
FIG. 2 is a schematic architectural diagram of a communications system according to this application;
FIG. 3(a) to FIG. 3(c) are a schematic diagram of a service of a mobile phone according to the conventional technology;
FIG. 4 is a schematic diagram of communication between a SIM 1 and a SIM 2 according to this application;
FIG. 5 is a flowchart of a communications method according to this application;
FIG. 6 is a flowchart of another communications method according to this application;
FIG. 7A to FIG. 7F are a flowchart of an example of a communications method according to this application;
FIG. 8 is a schematic diagram of data transmission of a SIM B according to this application;
FIG. 9A to FIG. 9E are a flowchart of an example of another communications method according to this application;
FIG. 10 is a schematic diagram of a structure of a communications apparatus according to this application;
FIG. 11 is a schematic diagram of a structure of a first mobility management entity according to this application;
FIG. 12 is a diagram of a structure of a communications apparatus according to this application; and
FIG. 13 is a diagram of a structure of a first mobility management entity according to this application.

### DESCRIPTION OF EMBODIMENTS

The following further describes in detail this application with reference to accompanying drawings.

Embodiments of this application provide a communications method and apparatus, so that a dual-card terminal device simultaneously performs services by using two telephone cards. The method and the apparatus in this application are based on a same inventive concept. Because problem resolving principles of the method and the apparatus are similar, mutual reference may be made to implementations of the apparatus and the method, and repeated parts are not described herein.

In the following, some terms in this application are described, so as to help a person skilled in the art have a better understanding.
(1) A terminal device includes a device that provides a user with voice and/or data connectivity, for example, may include a handheld device having a wireless connection function, or a processing device connected to a wireless modem. The terminal device may communicate with a core network through a radio access network (radio access network, RAN), and exchange voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a mobile (mobile) console, a remote station (remote station), an access point (access point, AP), a remote terminal device (remote terminal), an access terminal device (access terminal), a user terminal device (user terminal), a user agent (user agent), a user device (user device), or the like. For example, the terminal device may include a mobile phone (or referred to as a "cellular" phone), a computer with a mobile terminal device, a portable, a pocket-sized, a handheld, a computer built-in, or an in-vehicle mobile apparatus, a smart wearable device (such as a smartwatch or smart glasses), and the like. For example, the terminal device may include a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a personal communications service (personal communications service, PCS) phone, a cordless phone, a session initiation protocol (session initiation protocol, SIP) phone, a wireless local loop (wireless local loop, WLL) station, a personal digital assistant (personal digital assistant, PDA), and the like. The terminal device having a wireless transceiver function and a chip that may be disposed in the terminal device are collectively referred to as a terminal device in this application.
(2) A terminal device supporting a dual card function may have two or more subscriber identity modules (Subscriber Identity Modules, SIMs). Each SIM may include a modem (modem). In another embodiment, the SIM may further include a radio frequency unit. Specifically, with reference to FIG. 4, a communication process between a SIM 1 of a terminal and a network device includes: A modem 1 obtains information such as a user identity from the SIM 1, and establishes communication with the network device by using the information. After generating data, the modem 1 sends the data to the network device (for example, a base station) through a radio frequency unit 1 by using a transmit antenna. Correspondingly, after receiving the data of the network device (for example, the base station), a receive antenna 1 sends the data to the modem 1 through the radio frequency unit 1, and the modem 1 processes the data. The same rule applies to a SIM 2.

Specifically, the terminal device has two modules: the SIM 1 and the SIM 2, and supports installation of a SIM card 1 and a SIM card 2. The SIM card 1 is connected to the modem 1, the modem 1 is connected to the radio frequency unit 1, and the radio frequency unit 1 is connected to the receive antenna 1. The SIM card 2 is connected to a modem 2, the modem 2 is connected to a radio frequency unit 2, and the radio frequency unit 2 is connected to a receive antenna 2. The two SIMs share a same transmit antenna. Because the transmit antenna is shared, the two SIMs share one transmit chain, and only one SIM can occupy the transmit chain to send data at a same moment.

In embodiments of this application, the communications apparatus supports the SIM 1 and the SIM 2, both the SIM card 1 and the SIM card 2 are installed on the communications apparatus, and the communications apparatus has the modem 1 supporting communication of the SIM 1 and the modem 2 supporting communication of the SIM 2. It should be noted that the SIM in this application may be a SIM in another form such as a USIM, an eSIM, or a soft SIM. This is not limited in this application.

It should be noted that, in the 3GPP standard, a SIM and a SIM card may refer to a same module, and the SIM and the SIM card may be interchanged in some embodiments.

(3) The network device is a device having a wireless transceiver function or a chip that can be disposed in the network device. The network device may include an access network device and a core network device. The access network device includes a device between a core network and a user terminal. The access network device may include but is not limited to: a gNB, a radio network controller (radio network controller, RNC), an evolved NodeB (evolved NodeB, eNB), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like; or may be a network node forming a gNB or a transmission point, for example, a baseband unit (BBU), or a distributed unit (distributed unit, DU). A first network device mentioned below may be an access network device. For example, the first network device is a gNB.

The core network device includes a network element providing a core switching or call routing function. The core network device may include an access and mobility management function (access and mobility management function, AMF) network element, a session management function (session management function, SMF) network element, and the like. In the following, the core network device may include a mobility management entity such as an AMF.

(4) Terms "system" and "network" may be used interchangeably in embodiments of this application.

(5) In the description of this application, words such as "first" and "second" are merely used for distinction and description, and shall not be understood as an indication or implication of relative importance or an indication or implication of an order.

To describe the technical solutions in embodiments of this application more clearly, the following describes the communications method and apparatus according to embodiments of this application in detail with reference to the accompanying drawings.

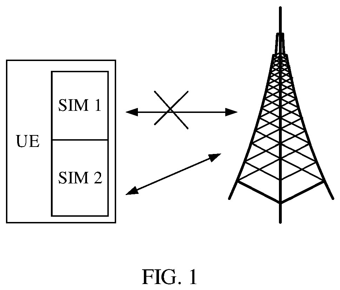

In an embodiment, a terminal device may be equipped with two telephone cards (SIM cards) at the same time. The telephone cards may be but are not limited to a SIM card, a USIM card, an eSIM card, or a soft SIM card. The terminal device may register with a network by using the two telephone cards. However, in consideration of costs and power consumption, a terminal device equipped with dual cards may have only one transmit chain (transmit chain, Tx chain), in other words, two telephone cards of the terminal device share and preempt one transmit chain, that is, the terminal device supports a dual-card dual-standby single-pass mode or a dual-card single-standby single-pass mode. The dual-card dual-standby single-pass terminal device has two receive chains and one transmit chain, as shown in the case in FIG. 1. The dual-card single-standby single-pass terminal device has one receive chain and one transmit chain. For this type of terminal device, a service cannot be performed simultaneously by using two telephone cards. To be specific, when the terminal device uses one telephone card to perform a service, the other telephone card cannot perform a service, for example, internet access or calling. For example, it can be learned from the schematic diagram in which a terminal device supporting dual cards performs a service shown in FIG. 1, that when UE that supports a SIM 1 and a SIM 2 performs a service by using the SIM 2, the SIM 1 disconnects a service connection to a corresponding network. This type of terminal device brings inconvenience to the user, and affects user experience.

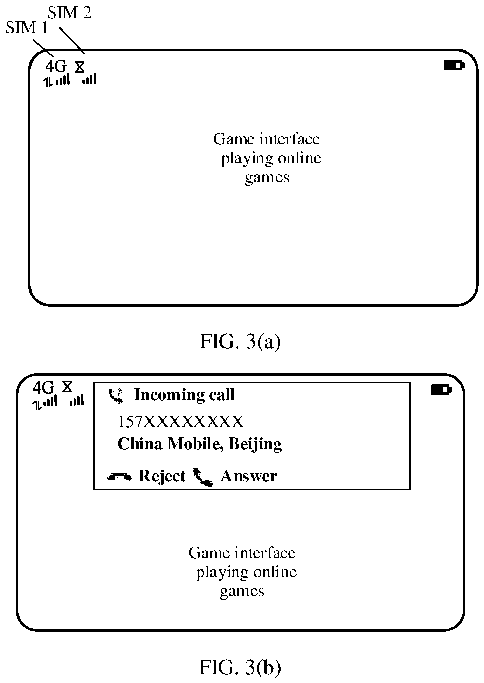

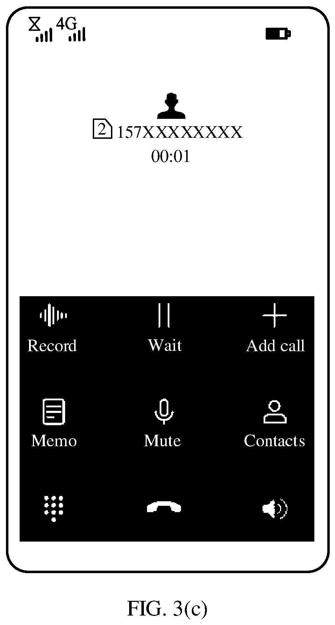

For example, the terminal device is a mobile phone. In a scenario, the SIM 1 and the SIM 2 are installed in the mobile phone of the user. When the user plays a game by using the SIM 1 of the mobile phone, for example, the mobile phone shown in FIG. 3(a) displays an interface on which the user is playing a game by using the SIM 1. In this case, the SIM card 2 of the mobile phone suddenly receives a call, as shown in FIG. 3(b). However, the mobile phone supports only a service connection between one SIM and a network, in other words, the mobile phone supports only one SIM to receive and send signaling or data on the network, and the other SIM is disconnected from the network. Therefore, the game can only continue to be played by using the SIM card 1, and the call of the SIM 2 cannot be connected. Alternatively, the game performed on the mobile phone by using the SIM card 1 is ended, so that the call of the SIM card 2 is connected and started, as shown in FIG. 3(c).

In the foregoing embodiments and examples, it is clearly that the user can perform a service by using only one SIM at one moment, in other words, the user can connect to the network and receive and send data or signaling by using only one SIM. This brings much inconvenience to the user, and affects user experience. Based on this, an embodiment of this application provides a communications method, so that two SIMs of a terminal device can simultaneously perform services, which improves user experience.

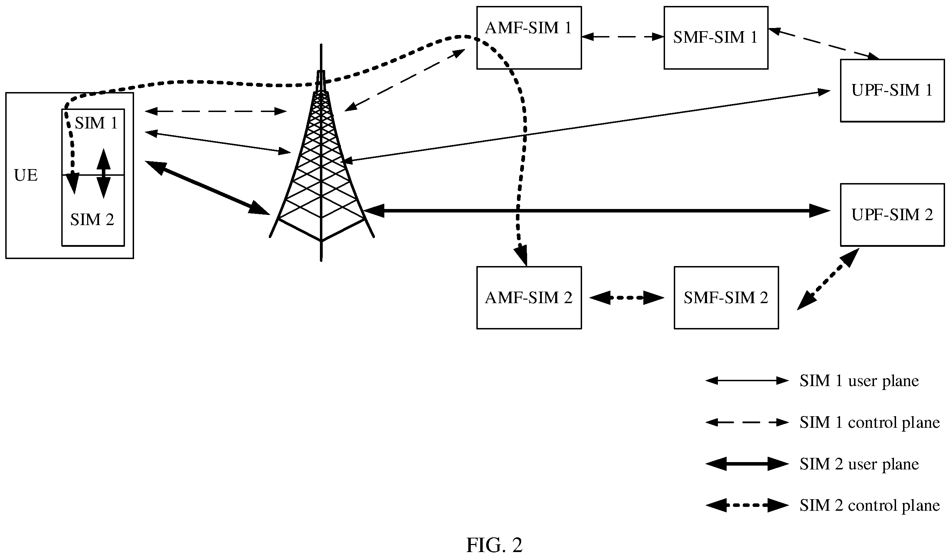

FIG. 2 shows a possible architecture of a communications system to which a communications method according to an embodiment of this application is applicable. The architecture of the communications system may include a communications apparatus supporting a SIM 1 and a SIM 2 (the SIM 1 corresponds to a SIM card, and the SIM 2 corresponds to a SIM card 2), a network device that serves the SIM card 1 of the communications apparatus, a mobility management entity that serves the SIM card 1 of the communications apparatus, for example, an access and mobility management function (access and mobility management function, AMF) network element or a mobility management entity (mobility management entity, MME), a mobility management entity that serves the SIM card 2 of the communications apparatus, a user plane function network element that serves the SIM card 1 of the communications apparatus, for example, a user plane function (user plane function, UPF) network element or a serving gateway (serving gateway, SGW), a user plane function network element that serves the SIM 2 of the communications apparatus, a session management function network element that serves the SIM card 1 of the communications apparatus, for example, a session management function (session management function, SMF) network element or a public data network (public data network, PDN) gateway (PDN gateway, PGW), and a session management function network element that serves the SIM card 2 of the communications apparatus. For example, in FIG. 2, the communications apparatus is shown as UE supporting the SIM 1 and the SIM 2, the mobility management entity that serves the SIM 1 of the communications apparatus is shown as an AMF-SIM 1, the mobility management entity that serves the SIM 2 of the communications apparatus is shown as an AMF-SIM 2, the user plane function network element that serves the SIM 1 of the communications apparatus is shown as a UPF-SIM 1, the user plane function network element that serves the SIM 2 of the communications apparatus is shown as a UPF-SIM 2, the session management function network element that serves the SIM 1 of the communications apparatus is shown as an SMF-SIM 1, and the session management function network element that serves the SIM 2 of the communications apparatus is shown as an SMF-SIM 2. Certainly, the communications system further includes a network device that serves the SIM 2 of the communications apparatus, or further includes another device. Details are not shown in this application. This embodiment uses 5G as an example, and is also applicable to a 4G network. For the 4G network, the AMF may be replaced with the mobility management entity (mobility management entity, MME), and the SMF and the UPF may be replaced with the public data network (public data network, PDN) gateway (PDN gateway, PGW) and the serving gateway (serving gateway, SGW).

In this embodiment of this application, home public land mobile networks (public land mobile networks, PLMNs) of the SIM card 1 and the SIM card 2 of the communications apparatus are the same. The SIM card 1 and the SIM card 2 in this embodiment of this application have a same PLMN, in other words, a same carrier provides a service for the SIM card 1 and the SIM card 2 of the communications apparatus, for example, both the SIM card 1 and the SIM card 2 of the communications apparatus belong to China Mobile or China Unicom. This is not limited in this application. The SIM 1 of the communications apparatus is in a connected state, and the SIM 2 needs to establish a connection to a network. According to the method provided in this embodiment of this application, the SIM 1 and the SIM 2 of the communications apparatus can simultaneously perform services.

For example, in FIG. 4, a thin solid line represents a connection to a user plane of the SIM 1, a thin dashed line represents a connection to a control plane of the SIM 1, a thick solid line represents a connection to a user plane of the SIM 2, and a thick dashed line represents a connection to a control plane of the SIM 2. The AMF-SIM 1 may send a paging (paging) notification of the SIM 2 to the UE through a non access signaling (non access signaling, NAS) channel of the SIM 1. The UE carries a NAS message of the SIM 2 in a NAS message of the SIM 1. The AMF-SIM 2 controls, by using the SMF-SIM 2, the UPF-SIM 2 of the SIM 2 to establish a transmission channel with the network device (for example, a base station) of the SIM 1. The base station of the SIM 1 configures, on the UE, a data radio bearer (data radio bearer, DRB) specially used for transmission of the SIM card 2. In this way, data transmission of the SIM card 2 may be implemented by using the SIM 1, so that the two SIMs of the UE can simultaneously perform services.

It should be noted that although network elements or devices that separately serve the SIM card 1 and the SIM card 2 are shown in the figure, and the devices are different, in some scenarios, network elements or devices that serve the SIM card 1 and the SIM card 2 are the same, or partially the same and partially different. This is not limited in this application.

Based on the foregoing descriptions, a communications method provided in an embodiment of this application is applicable to the communications system shown in FIG. 2. Refer to FIG. 5. A specific procedure of the method may include the following steps.

Step 501: A communications apparatus receives a first paging notification message from a first mobility management entity through a SIM 1, where the first paging notification message includes an identifier of a SIM card 2.

During specific implementation, the communications apparatus may be a terminal device or a chip disposed in a terminal device. This is not limited in this application. The communications apparatus supports a SIM card 1 and the SIM card 2, the communications apparatus includes a first communications module SIM 1 and a second communications module SIM 2, the SIM 1 corresponds to the SIM card 1, the SIM 2 corresponds to the SIM card 2, the communications apparatus is in a connected state by using the SIM 1, and the first mobility management entity provides a service for the SIM 1.

PLMNs of the SIM card 1 and the SIM card 2 are the same, that is, the SIM card 1 and the SIM card 2 belong to a same carrier.

Step 502: The communications apparatus sends a service request of the SIM card 2 and the identifier of the SIM card 2 to the first mobility management entity.

Specifically, the communications apparatus may receive the first paging notification message from the first mobility management entity through a NAS channel of the SIM 1. The first paging notification message may further include indication information for paging another SIM. The first paging notification message may be a paging notification (paging notification).

In an optional implementation, an identifier of the SIM 2 may be a 5th generation (5 generation, 5G)-globally unique temporary UE identity (globally unique temporary UE identity, GUTI)-2.

In an implementation, the communications apparatus forwards the first paging notification message from the SIM 1 to the SIM 2. Then, the communications apparatus sends the service request of the SIM card 2 from the SIM 2 to the SIM 1. The communications apparatus sends the service request of the SIM card 2 and the identifier of the SIM card 2 to the first mobility management entity through the SIM 1.

In the foregoing method, when the communications apparatus sends a service request of the SIM 2 and the identifier of the SIM 2 to the first mobility management entity through the SIM 1, a NAS message that is sent by the communications apparatus to the first mobility management entity through the SIM 1 may carry the service request (service request) of the SIM card 2 and the identifier of the SIM card 2. Optionally, the NAS message may further carry a correlation indication, so that the first mobility management entity performs correlation processing on the two SIMs.

In another implementation, the communications apparatus forwards the first paging notification message from the SIM 1 to the SIM 2, and the communications apparatus sends the service request of the SIM card 2 and the identifier of the SIM card 2 to the first mobility management entity through the SIM 2.

Specifically, the communications apparatus first sends the service request of the SIM card 2 and the identifier of the SIM card 2 to a first network device, and then the first network device sends the service request of the SIM card 2 and the identifier of the SIM card 2 to the first mobility management entity.

For example, after the first mobility management entity receives the service request of the SIM card 2, the first mobility management entity obtains, based on the received identifier of the SIM card 2, an address of a second mobility management entity that provides a service for the SIM card 2, and sends a service request of the SIM card 2 to the second mobility management entity. Specifically, the first mobility management entity may send the service request of the SIM card 2 to the second mobility management entity by invoking an N mobility management entity_Communication_Transport service.

Specifically, the service request of the SIM card 2 includes the identifier of the SIM card 2.

In an optional implementation, the second mobility management entity sends, by invoking an N session management function network element_PDUSession_UpdateSMContext Request service, a request to a session management function network element that serves the SIM card 2, to request to restore a core network transmission channel for the SIM 2. Then, the session management function network element sends, by using an N4 session modification request (N4 Session Modification Request), a request to a user plane function network element that serves the SIM card 2, to request to restore the core network transmission channel for the SIM 2. Next, the user plane function network element sends a response message to the session management function network element by using an N4 session modification response (N4 Session Modification Response). The response message carries information about a tunnel (tunnel) that is allocated by the user plane function network element to the SIM 2 and that is used for downlink transmission. Finally, the session management function network element sends the tunnel information to the second mobility management entity by invoking an N session management function network element_PDU Session_UpdateSMContext ReSponse service.

The second mobility management entity sends information about the user plane function network element to the first mobility management entity by invoking an N mobility management entity_Communication_Transport. The first mobility management entity sends the information about the user plane function network element to the first network device by using an N2 request (N2 Request). In an example, the N2 request may further include indication information. The indication information may be the identifier of the SIM 2, or may be indication information used to notify the first network device that a data bearer is used to transmit data of another SIM card.

In a specific embodiment, the communications apparatus receives a configuration of a first radio bearer from the first network device through the SIM 1. The first radio bearer is used for data transmission of the SIM card 2. The communications apparatus transmits, through the SIM 1 and the first network device by using the first radio bearer, data belonging to the SIM card 2.

For example, the first network device may send the configuration of the first radio bearer to the SIM 1 of the communications apparatus by using an RRC connection reconfiguration (RRC Connection reconfiguration). The configuration of the first radio bearer may carry indication information. The indication information may be the identifier of the SIM card 2, and may further be indication information used to notify the communications apparatus that the radio bearer is used to transmit data of another SIM card.

Specifically, after the communications apparatus receives the configuration of the first radio bearer from the first network device through the SIM 1, the communications apparatus stores information about the first radio bearer through the SIM 1, that is, records that the first radio bearer is used to transmit the data of the SIM card 2. Then, the communications apparatus sends the configuration of the first radio bearer from the SIM 1 to the SIM 2, and the communications apparatus establishes a correspondence between the first radio bearer and a data flow of the SIM card 2 through the SIM 2. The data flow of the SIM card 2 is a quality of service (quality of service, QoS) flow of the SIM card 2.

For example, that the communications apparatus transmits, through the SIM 1 and the first network device by using the first radio bearer, data belonging to the SIM 2 may be classified into downlink data transmission and uplink data transmission, which may be specifically as follows:
In an example, for downlink data (first data), when the communications apparatus transmits, through the SIM 1 and the first network device by using the first radio bearer, data belonging to the SIM card 2, a specific method may be as follows:
The communications apparatus receives the first data from the first network device based on the first bearer through the SIM 1. The communications apparatus determines that the first data belongs to the SIM card 2. The communications apparatus sends the first data from the SIM 1 to the SIM 2.

Specifically, a specific method of determining, by the communications apparatus, that the first data belongs to the SIM card 2 may be: The communications apparatus determines, by using the information about the first radio bearer stored in the SIM 1, that the first radio bearer is used to transmit the data of the SIM 2, so as to determine that the first data belongs to the SIM card 2.

When sending the first data from the SIM 1 to the SIM 2, the communications apparatus may further send an identifier of the first radio bearer to the SIM 2. Subsequently, the SIM 2 outputs the first data to a corresponding application based on the identifier of the first radio bearer.

In another example, for uplink data (second data), when the communications apparatus transmits, through the SIM 1 and the first network device by using the first radio bearer, data belonging to the SIM card 2, a specific method may be as follows:

The communications apparatus obtains the second data through the SIM 2. The communications apparatus determines, by using the SIM 1, the first radio bearer for transmitting the second data. The communications apparatus sends the second data to the first network device based on the first radio bearer through the SIM 1.

Specifically, a specific method of obtaining, by the communications apparatus, the second data through the SIM 2 may be as follows: The communications apparatus receives application layer data through the SIM 2, filters data based on a packet filter (packet filter, PF), then maps the data to the first radio bearer, and generates a corresponding data packet. The generated data packet is the second data. The communications apparatus sends the second data from the SIM 2 to the SIM 1, and sends the identifier of the first radio bearer at the same time. A specific method of determining, by the communications apparatus by using the SIM 1, the first radio bearer for transmitting the second data may be as follows: The communications apparatus determines, by using the identifier of the first radio bearer, the first radio bearer for transmitting the second data.

In an optional implementation, before the communications apparatus transmits, through the SIM 1 and the first network device by using the first radio bearer, data belonging to the SIM card 2, and after the communications apparatus establishes a correspondence between the first radio bearer and a data flow of the SIM card 2 through the SIM 2, the first network device responds, to the first mobility management entity by sending an N2 Request ACK to the first mobility management entity, tunnel information used by the first network device to transmit the data of the SIM card 2. The first mobility management entity sends the tunnel information to the second mobility management entity by invoking the N mobility management entity_Communication_ Transport service. Then, the second mobility management entity forwards the tunnel information to the session management function network element of the SIM 2 by invoking an N session management function network element_PDU Session_UpdateSMContext Request service. Then, the session management function network element forwards the tunnel information to the user plane function network element of the SIM 2 by using the N4 session modification request, so that a tunnel connection between the user plane function network element and the first network device is established. Then, the user plane function network element sends a response message to the session management function network element by using the N4 session modification response, and the session management function network element sends a response message to the second mobility management entity by invoking an N session management function network element_PDU Session_UpdateSMContext Response service.

In a specific example, a radio access technology (radio access technology, RAT) standard supported by the SIM 1 of the communications apparatus may be the same as a RAT standard supported by the SIM 2. For example, the communications apparatus may access 5G through both the SIM 1 and the SIM 2. Alternatively, the RAT standard supported by the SIM 1 of the communications apparatus is higher than the RAT standard supported by the SIM 2. For example, the communications apparatus accesses 5G through the SIM 1, and accesses 4G through the SIM 2.

In an example, in a scenario in which the radio access technology (radio access technology, RAT) standard supported by the SIM 1 of the communications apparatus is the same as the RAT standard supported by the SIM 2, an initial registration process may be as follows:
The communications apparatus sends a first registration request to the first mobility management entity through the SIM 1. The first registration request includes an identifier of the SIM card 1 and the identifier of the SIM card 2. In addition, the communications apparatus sends a second registration request to a second mobility management entity through the SIM 2. The second registration request includes the identifier of the SIM card 1 and the identifier of the SIM card 2. An identifier of the SIM 1 may be a 5G GUTI-1.

In this example, after the first mobility management entity receives the first registration request, the first mobility management entity stores a correlation relationship between the SIM card 1 and the SIM card 2; and after the second mobility management entity receives the second registration request, the second mobility management entity stores the correlation relationship between the SIM card 1 and the SIM card 2.

Optionally, each of the first registration request and the second registration request may further carry a correlation indication, so that a core network element (or entity) performs correlation processing on the SIM card 1 and the SIM card 2.

After registration, the communications apparatus is in a connected state by using the SIM 1, and is in an idle state by using the SIM 2.

In another example, in a scenario in which the RAT standard supported by the SIM 1 of the communications apparatus is higher than the RAT standard supported by the SIM 2, an initial registration process may be as follows:
When the communications apparatus is in a registered state by using the SIM 1, the communications apparatus sends a first message to the first mobility management entity through the SIM 1. The first message includes a third registration request of the SIM card 2 and the identifier of the SIM 2. The communications apparatus receives a second message from the first mobility management entity through the SIM 1. The second message indicates that registration of the SIM card 2 is completed.

In this example, before the communications apparatus sends the first message to the first mobility management entity through the SIM 1, the communications apparatus generates the third registration request by using the SIM 2, and sends the third registration request from the SIM 2 to the SIM 1.

After receiving the first message, the first mobility management entity stores the correlation relationship between the SIM card 1 and the SIM card 2.

According to the communications method provided in this embodiment of this application, a communications apparatus supporting two SIMs may be enabled to support the two SIMs in simultaneously transmitting and receiving data, which improves user experience.

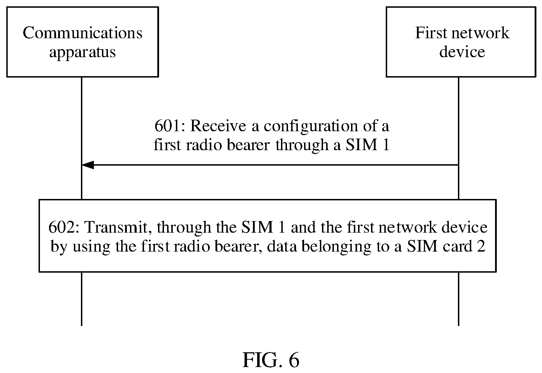

Based on the foregoing embodiment, an embodiment of this application further provides a communications method, applicable to the communications system shown in FIG. 2. Refer to FIG. 6. A specific procedure of the method may include the following steps.

Step 601: A communications apparatus receives a configuration of a first radio bearer from a first network device through a SIM 1, where the first radio bearer is used for data transmission of a SIM card 2.

During specific implementation, the communications apparatus may be a terminal device or a chip disposed in a terminal device. This is not limited in this application. The communications apparatus supports a SIM card 1 and the SIM card 2, the communications apparatus includes a first communications module SIM 1 and a second communications module SIM 2, the SIM 1 corresponds to the SIM card 1, the SIM 2 corresponds to the SIM card 2, and the SIM 1 is in a connected state.

Home public land mobile networks PLMNs of the SIM card 1 and the SIM card 2 are the same.

Step 602: The communications apparatus transmits, through the SIM 1 and the first network device by using the first radio bearer, data belonging to the SIM card 2.

In an optional implementation, the communications apparatus stores information about the first radio bearer through the SIM 1; and the communications apparatus establishes a correspondence between the first radio bearer and a data flow of the SIM card 2 through the SIM 2. Specifically, for detailed descriptions, refer to related descriptions in the embodiment shown in FIG. 5. Details are not described herein again.

In an example, the communications apparatus transmits, through the SIM 1 and the first network device by using the first radio bearer, the data belonging to the SIM card 2. A specific method may be as follows: The communications apparatus receives first data from the first network device by using the first bearer through the SIM 1. The communications apparatus determines that the first data belongs to the SIM card 2. The communications apparatus sends the first data from the SIM 1 to the SIM 2. Specifically, for detailed descriptions, refer to related descriptions in the embodiment shown in FIG. 5. Details are not described herein again.

In another example, the communications apparatus transmits, through the SIM 1 and the first network device by using the first radio bearer, the data belonging to the SIM card 2. A specific method may be further as follows: The communications apparatus obtains second data through the SIM 2. The communications apparatus determines, by using the SIM 1, the first radio bearer for transmitting the second data. The communications apparatus sends the second data to the first network device based on the first radio bearer through the SIM 1. Specifically, for detailed descriptions, refer to related descriptions in the embodiment shown in FIG. 5. Details are not described herein again.

In a specific example, a radio access technology (radio access technology, RAT) standard supported by the SIM 1 of the communications apparatus may be the same as a RAT standard supported by the SIM 2. For example, the communications apparatus may access 5G through both the SIM 1 and the SIM 2. Alternatively, the RAT standard supported by the SIM 1 of the communications apparatus is higher than the RAT standard supported by the SIM 2. For example, the communications apparatus accesses 5G through the SIM 1, and accesses 4G through the SIM 2.

In an example, in a scenario in which the radio access technology (radio access technology, RAT) standard supported by the SIM 1 of the communications apparatus is the same as the RAT standard supported by the SIM 2, an initial registration process may be as follows:
The communications apparatus sends a first registration request to a first mobility management entity through the SIM 1. The first registration request includes an identifier of the SIM 1 and an identifier of the SIM card 2. The communications apparatus sends a second registration request to a second mobility management entity through the SIM 2. The second registration request includes an identifier of the SIM card 1 and the identifier of the SIM card 2.

In another example, in a scenario in which the RAT standard supported by the SIM 1 of the communications apparatus is higher than the RAT standard supported by the SIM 2, an initial registration process may be as follows:
The communications apparatus sends a first message to the first mobility management entity through the SIM 1. The first message includes a third registration request of the SIM 2 and the identifier of the SIM card 2. The communications apparatus receives a second message from the first mobility management entity through the SIM 1. The second message indicates that registration of the SIM card 2 is completed.

Specifically, for detailed descriptions of the foregoing two examples, refer to related descriptions in the embodiment shown in FIG. 4. Details are not described herein again.

In an optional implementation, the communications apparatus sends a service request of the SIM card 2 from the SIM 2 to the SIM 1, and sends a service request of the SIM 2 and the identifier of the SIM card 2 to the first mobility management entity through the SIM 1. For detailed descriptions, refer to related descriptions in the embodiment shown in FIG. 5. Details are not described herein again.

According to the communications method provided in this embodiment of this application, a communications apparatus supporting two SIMs may be enabled to support the two SIMs in simultaneously transmitting and receiving data, which improves user experience.

Based on the foregoing embodiments, an embodiment of this application further provides a communications system. The communications system may include a communications apparatus, a first network device, a first mobility management entity, a second mobility management entity, a session management function network element, and a user plane function network element. A SIM card 1 and a SIM card 2 are supported. The communications apparatus includes a first communications module SIM 1 and a second communications module SIM 2, the SIM 1 corresponds to the SIM card 1, the SIM 2 corresponds to the SIM card 2, and the SIM 1 is in a connected state. PLMNs of the SIM card 1 and the SIM card 2 are the same. The first network device serves the SIM card 1, and the second mobility management entity, the session management function network element, and the user plane function network element serves the SIM card 2. Specifically:
The communications apparatus is configured to receive a first paging notification message from the first mobility management entity through the subscriber identity module SIM 1. The first paging notification message includes an identifier of the SIM card 2.

The communications apparatus is further configured to: send a service request of the SIM 2 and the identifier of the SIM card 2 to the first mobility management entity; and send a service request of the SIM card 2 to the second mobility management entity.

The second mobility management entity is configured to send a request message to the session management function network element. The request message is used to request to restore a core network transmission channel for the SIM 2.

The session management function network element is configured to send the request message to the user plane function network element.

The user plane function network element is configured to send a response message to the session management function network element. The response message includes information about a tunnel that is allocated by the user plane function network element to the SIM 2 and that is used for data transmission.

The session management function network element is further configured to send the tunnel information to the second mobility management entity.

The second mobility management entity is further configured to send information about the user plane function network element to the first mobility management entity.

The first mobility management entity is further configured to send the information about the user plane function network element and an identifier of the SIM 2 to the first network device.

The first network device is configured to send a configuration of a first radio bearer to the SIM 1 of the communications apparatus. The first radio bearer is used for data transmission of the SIM card 2.

The communications apparatus is further configured to transmit, through the SIM 1 and the first network device by using the first radio bearer, the data belonging to the SIM card 2.

For example, the communications apparatus is further configured to: forward the first paging notification message from the SIM 1 to the SIM 2; send the service request from the SIM 2 to the SIM 1; and send the service request of the SIM card 2 and the identifier of the SIM card 2 to the first mobility management entity through the SIM 1.

Specifically, the communications apparatus is further configured to: forward the first paging notification message from the SIM 1 to the SIM 2, and send the service request of the SIM card 2 and the identifier of the SIM card 2 to the first mobility management entity through the SIM 2.

In an optional implementation, when the communications apparatus transmits, through the SIM 1 and the first network device by using the first radio bearer, the data belonging to the SIM card 2, the communications apparatus is specifically configured to: receive first data from the first network device based on the first bearer through the SIM 1; determine that the first data belongs to the SIM card 2; and send the first data from the SIM 1 to the SIM 2.

In another optional implementation, when the communications apparatus transmits, through the SIM 1 and the first network device by using the first radio bearer, the data belonging to the SIM card 2, the communications apparatus is specifically configured to: obtain second data through the SIM 2; determine, by using the SIM 1, the first radio bearer for transmitting the second data; and send the second data to the first network device based on the first radio bearer through the SIM 1.

For example, the communications apparatus is further configured to: send a first registration request to the first mobility management entity through the SIM 1, where the first registration request includes an identifier of the SIM card 1 and the identifier of the SIM card 2; and send a second registration request to the second mobility management entity through the SIM 2, where the second registration request includes the identifier of the SIM card 1 and the identifier of the SIM card 2.

For example, the communications apparatus is further configured to: send a first message to the first mobility management entity through the SIM 1, where the first message includes a third registration request of the SIM card 2 and the identifier of the SIM 2; and receive a second message from the first mobility management entity through the SIM 1, where the second message indicates that registration of the SIM card 2 is completed.

It should be noted that, in the foregoing embodiment or subsequent embodiments, the SIM 1 is connected to a modem 1, the modem 1 is connected to a radio frequency unit 1, the SIM 2 is connected to a modem 2, and the modem 2 is connected to a radio frequency unit 2. Details may be shown in FIG. 4. In a communication process of the communications apparatus, a modem chip is configured to communicate with a network side, and communication between two SIMs may be specifically performed through a packet data convergence protocol (packet data convergence protocol, PDCP) layer of the modem chip. For example, that the SIM 1 communicates with a network is specifically that the modem 1 corresponding to the SIM 1 communicates with the network. The radio frequency unit 1 and the radio frequency unit 2 separately complete mutual conversion between a radio frequency signal and a digital baseband signal.

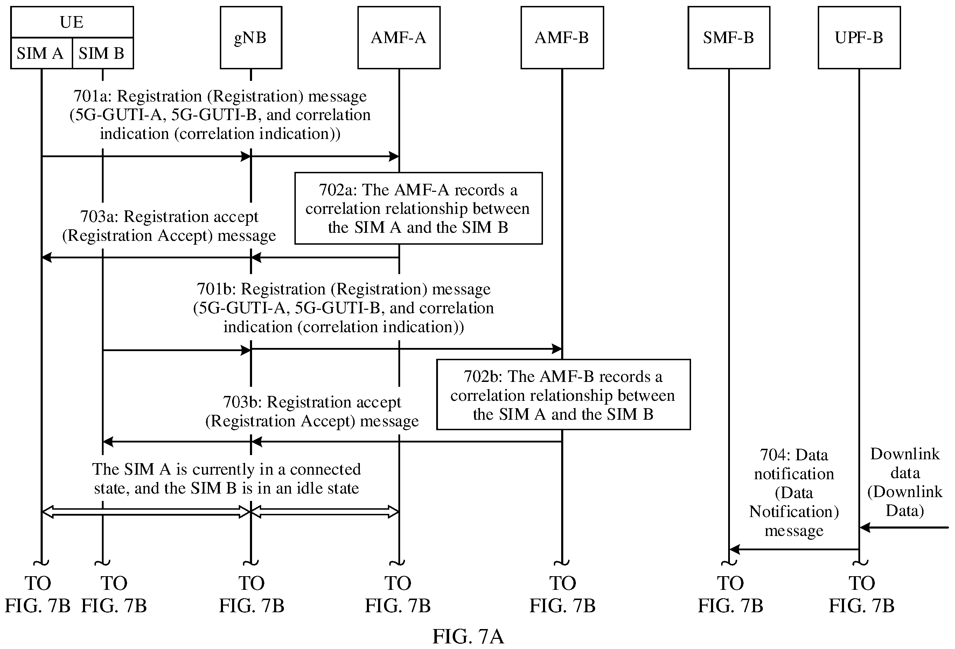

Based on the foregoing embodiment, an embodiment of this application further provides a specific example. In this example, an example in which a communications apparatus is UE is used for description. In this example, a SIM 1 supported by the UE is shown as a SIM A, and a SIM 2 supported by the UE is shown as a SIM B. The SIM A corresponds to a SIM card A, and the SIM B corresponds to a SIM card B. An example in which a network device that serves the SIM card A and the SIM card B of the UE is a gNB, a first mobility management entity that serves the SIM card A of the UE is an AMF-A, and a second mobility management entity, a session management function network element, and a user plane function network element that serve the SIM card B of the UE are respectively an AMF-B, an SMF-B, and a UPF-B is used for description. In this example, the SIM A and the SIM B support a same RAT standard, for example, both support 5G or both support 4G. For details, refer to FIG. 7A to FIG. 7F. A procedure of the example may include the following steps.

Step 701 to step 703: The SIM A and the SIM B separately initiate a registration process to a network. In addition to identifiers 5G-GUTI of the SIM card A and the SIM card B, an identifier 5G-GUTI of another card further needs to be carried in a registration message. Optionally, the registration message further carries a correlation indication, so that respective core network entities AMFs perform correlation processing on the two SIM cards.

For example, in step 701a, the SIM A of the UE sends the registration (Registration) message (namely, the first registration request in the foregoing implementation) to the AMF-A through the gNB, the registration message includes an identifier 5G-GUTI-A of the SIM card A and an identifier 5G-GUTI-B of the SIM card B, and optionally further includes the correlation indication (correlation indication).

In step 702a, the AMF-A records a correlation relationship between the SIM card A and the SIM card B.

In step 703a, the AMF-A sends a registration accept (Registration Accept) message to the SIM A of the UE through the gNB.

Similarly, in step 701b, the SIM B of the UE sends the registration (Registration) message (namely, the second registration request in the foregoing implementation) to the AMF-B through the gNB, the registration message includes the identifier 5G-GUTI-A of the SIM card A and the identifier 5G-GUTI-B of the SIM card B, and optionally further includes the correlation indication (correlation indication).

In step 702b, the AMF-B records the correlation relationship between the SIM card A and the SIM card B.

In step 703b, the AMF-b sends a registration accept (Registration Accept) message to the SIM B of the UE through the gNB.

The UE uses the SIM A to perform a service. That is, currently, the SIM A is in a connected state, and the SIM B is in an idle state.

Step 704 and step 705: When receiving downlink data (Downlink Data) sent to the SIM card B, and determining that a data channel corresponding to the downlink data does not exist, the UPF-B sends a data notification (Data Notification) message to an SMF (namely, the SMF-B) that serves the SIM card B, and the SMF-B sends a request to the AMF (namely, the AMF-B) that serves the SIM card B. In step 705, the SMF-B sends a request to the AMF-B by using an N1N2 transfer message (Namf_Communication_N1N2Message Transfer).

Step 706 and step 707: The AMF-B obtains, based on a record in step 702b, the identifier (5G-GUTI-A) of the SIM card A associated with the SIM card B; obtains, based on the identifier of the SIM card A, an address of the AMF-A that serves the SIM card A; and queries the AMF-A for a status of the SIM A, where a query message carries the identifiers of the SIM card A and the SIM card B.

Specifically, the query message may be a state query message (Namf_Communication_StateQuery).

Step 708: The AMF-A obtains a connection status of the SIM A, and if the SIM A is in a connected state, performs subsequent steps, otherwise, notifies the AMF-B that the SIM A is in an idle state, and the AMF-B performs execution according to an existing procedure.

Step 709 (optional step): The AMF-Afeeds back, to the AMF-B, that the SIM A is in the connected state, and the AMF-B waits for a connection of the SIM B.

Specifically, the AMF-A feeds back, to the AMF-B by using the state query message (Namf_Communication_StateQuery), that the SIM A is in the connected state.

Step 710 and step 711: The AMF-A sends a NAS message: a paging notification (paging notification) message to the SIM A through a NAS channel of the SIM A, where the paging notification message carries the identifier (for example, 5G-GUTI B) of the SIM card B. Optionally, the paging notification message may further carry indication information for paging another card (SIM card). After receiving the NAS message, the SIM A forwards the NAS message to the SIM B.

Step 712 and step 713: The SIM B sends a service request (Service Request) message to the AMF-A through the SIM card A. Specifically, the SIM B first sends the service request message to the SIM A, and then the SIM A carries the service request message of the SIM card B and the identifier of the SIM card B in a NAS message sent to the AMF-A, and optionally further carries the correlation indication.

The NAS message sent by the SIM A to the AMF-A may be an uplink NAS transport (UL NAS transport) message. The service request message may carry the identifier of the SIM card B, that is, 5G-GUTI B.

Step 714: The AMF-A obtains an address of the AMF-B based on the identifier of the SIM B carried in step 713, and sends, to the AMF-B, the service request message sent by the SIM B.

Specifically, the AMF-A may send, to the AMF-B by using transport information (Namf_Communication_transport), the service request message sent by the SIM B.

Step 715-1: The AMF-B sends a request to the SMF-B, to request to restore a core network transmission channel for the SIM B.

Specifically, the AMF-B may send the request to the SMF-B by using a PDU session update request (Nsmf_PDUSession_UpdateSMContext Request).

Step 715-2: The SMF-B sends a request to the UPF-B, to request to restore the core network transmission channel for the SIM B.

Specifically, the SMF-B may send the request to the UPF-B by using an N4 session modification request (N4 Session Modification Request).

Step 715-3: The UPF-B sends a response message, where the response message may carry information about a tunnel (tunnel) that is allocated by the UPF-B to the SIM B and that is used for downlink transmission.

Specifically, the UPF-B may send the response message to the SMF-B by using an N4 session modification response (N4 Session Modification Response).

Step 715-4: The SMF-B sends the tunnel information to the AMF-B.

Specifically, the SMF-B sends the tunnel information to the AMF-B by using a PDU session update response (Nsmf_PDU Session_UpdateSMContext ReSponse).

Step 716 and step 717: The AMF-B sends information about the UPF-B to the AMF-A, and the AMF-A sends the information about the UPF-B to the gNB. Indication information is carried in a message sent by the AMF-A to the gNB. The indication information may be the identifier of the SIM card B, or may be indication information used to notify the gNB that the data bearer is used to transmit other SIM data.

Specifically, the AMF-B may send information about the UPF to the AMF-A by using a transport information service (Namf_Communication_Transport), and the AMF-A sends the information about the UPF to the gNB by using an N2 request (N2 Request).

Step 718: The gNB configures a data radio bearer (data radio bearer, DRB) for the SIM A, where the DRB is used to transmit data of the SIM B.

Specifically, the gNB sends configuration information (that is, the configuration of the first radio bearer in the foregoing embodiment) to the SIM A by using an RRC connection reconfiguration (RRC Connection reconfiguration) message, so that the gNB configures the data radio bearer (data radio bearer, DRB) for the SIM A.

Indication information is carried in the RRC connection reconfiguration message. The indication information may be the identifier of the SIM card B, or may be indication information used to notify the UE that the DRB is used to transmit other SIM data.

Step 719: The SIM A locally records that the DRB is used to transmit data of the SIM card B.

Step 720 and step 721: The SIM A forwards the RRC connection reconfiguration message to the SIM B, and the SIM B establishes (and records) a correspondence between the DRB and a quality of service flow (QoS flow) of the SIM card B.

Specifically, the correspondence is used to subsequently generate data.

Step 722: The gNB sends, to the AMF-A, tunnel information used by the gNB to transmit the data of the SIM B.

Specifically, the gNB sends the tunnel information (AN tunel info) to the AMF-A by using an N2 request ACK (N2 Request ACK).

Step 723: The AMF-A sends the tunnel information to the AMF-B.

Specifically, the AMF-A sends the tunnel information to the AMF-B by using a transport information service (Namf_Communication_Transport).

Step 724: The AMF-B forwards the tunnel information to the SMF-B.

Specifically, the AMF-B forwards the tunnel information to the SMF-B by using a PDU session update request (Nsmf_PDU Session_UpdateSMContext Request) service.

Step 725: The SMF-B forwards the tunnel information to the UPF-B, to establish a tunnel connection between the UPF-B and the gNB.

Specifically, the SMF-B forwards the tunnel information to the UPF-B by using the N4 session modification request (N4 Session Modification Request).

Step 726 and step 727: The UPF-B and the SMF-B separately send a response message.

Specifically, the UPF-B sends the response message to the SMF-B by using the N4 session modification response (N4 Session Modification Response), and the SMF-B sends the response message to the AMF-B by using a PDU session update response (Nsmf_PDU Session_UpdateSMContext Response) service.

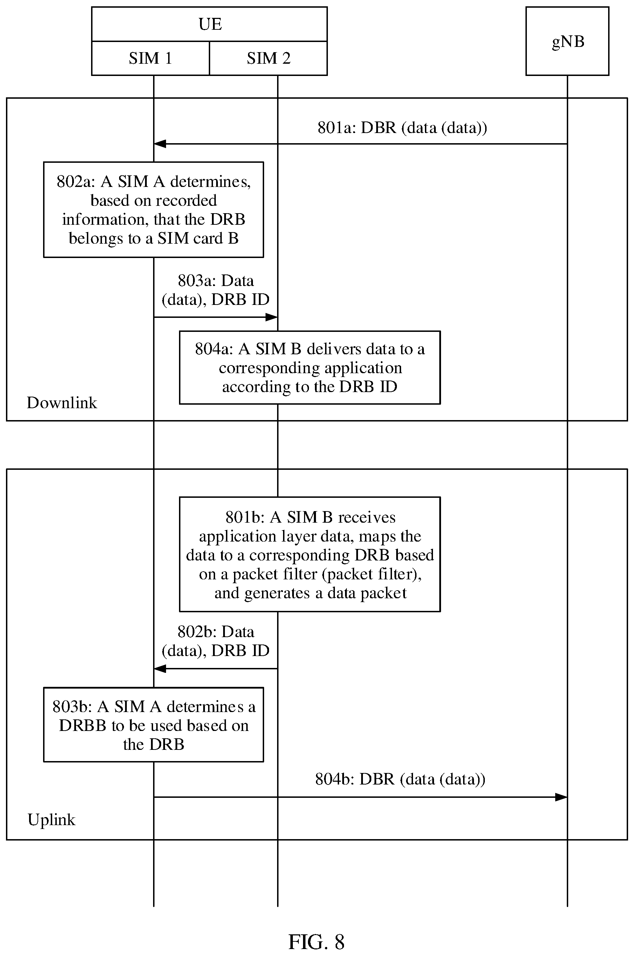

Further, after the SIM A of the UE is configured with the DRB for transmitting the data of the SIM B, when the data of the SIM B needs to be transmitted through the SIM A, a specific transmission process may be shown in FIG. 8, and the specific process may be as follows:

### For downlink data:

Step 801a: The SIM A receives data (data) of the DRB from the gNB.

Step 802a: The SIM A determines, based on recorded information (that is, the information recorded by the SIM A in step 719), that the DRB belongs to the SIM card B.

Step 803a: The SIM A forwards the data of the DRB to the SIM B.

Specifically, the SIM A further sends an identifier of the DRB (DRB ID) to the SIM B.

Step 804a: The SIM B determines a corresponding quality of service flow (QoS flow) based on the DRB ID, and delivers data to a corresponding application.

### For uplink data:

Step 801b: The SIM B receives application layer data, filters the data based on a packet filter (packet filter, PF), maps the data to a corresponding DRB, and adds the DRB ID to generate data (a data packet).

Step 802b: The SIM B sends the data (data) to the SIM A.

Specifically, the SIM B further sends the DRB ID to the SIM A.

Step 803b and step 804b: The SIM A sends, based on the DRB ID, the data to a DRB corresponding to the DRB ID.

Specifically, the SIM A determines a used DRB based on the DRB ID, and then sends the data to the gNB through the DRB corresponding to the DRB ID.

In the foregoing example, when the two SIM cards belong to a same carrier, and RATs supported by the communications apparatus for the two SIMs are the same, the two SIMs may simultaneously receive and send data. This resolves a current problem that a user can use only one SIM to perform a service, which improves user experience.

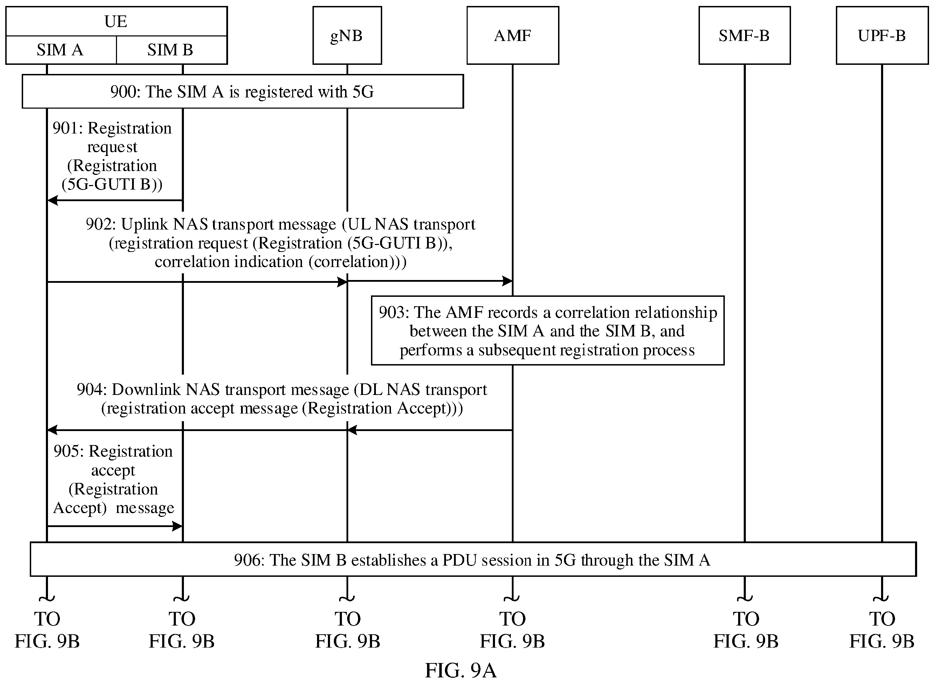

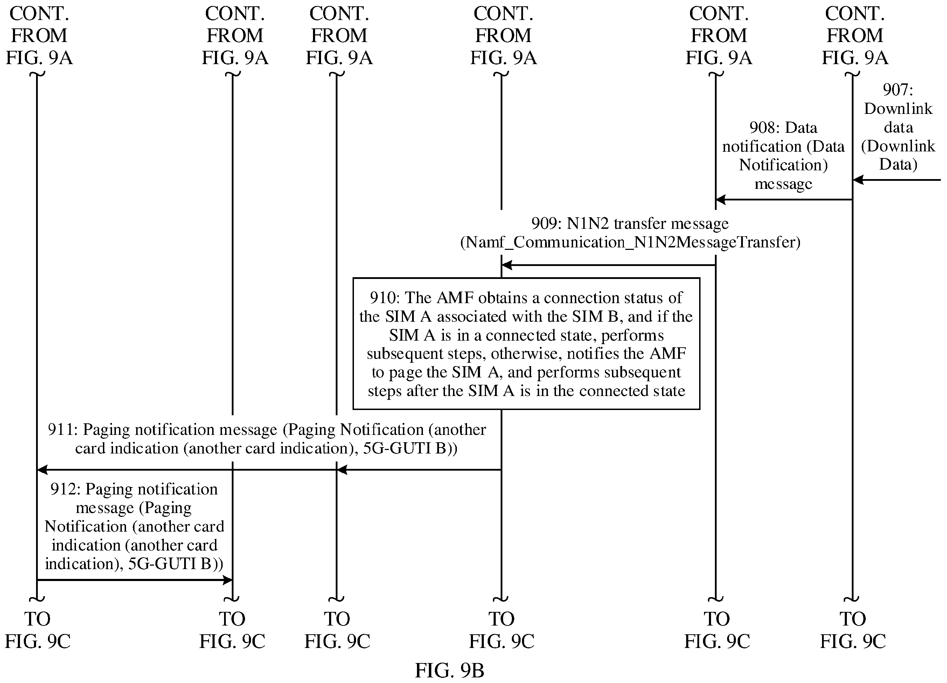

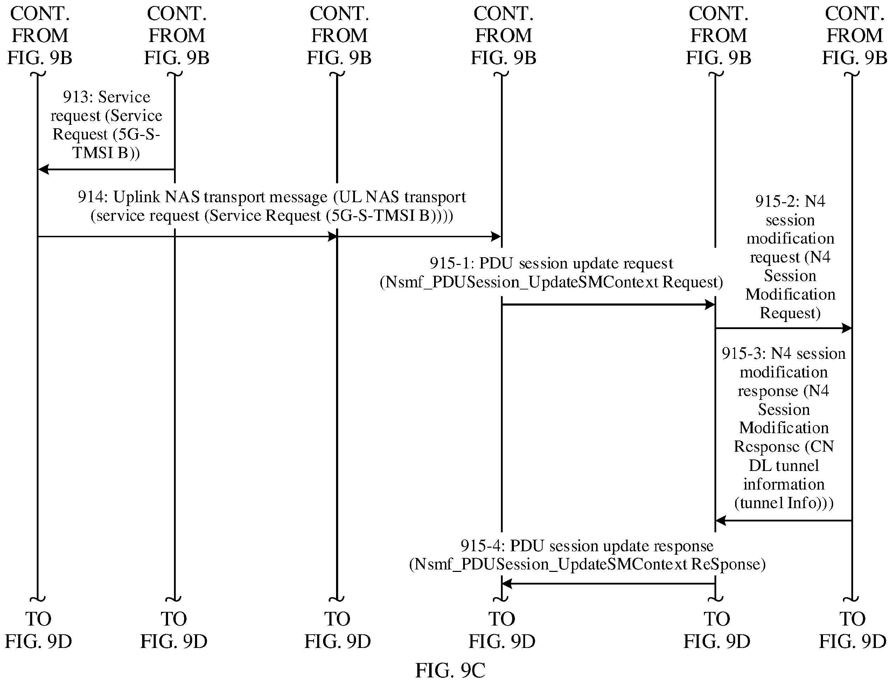

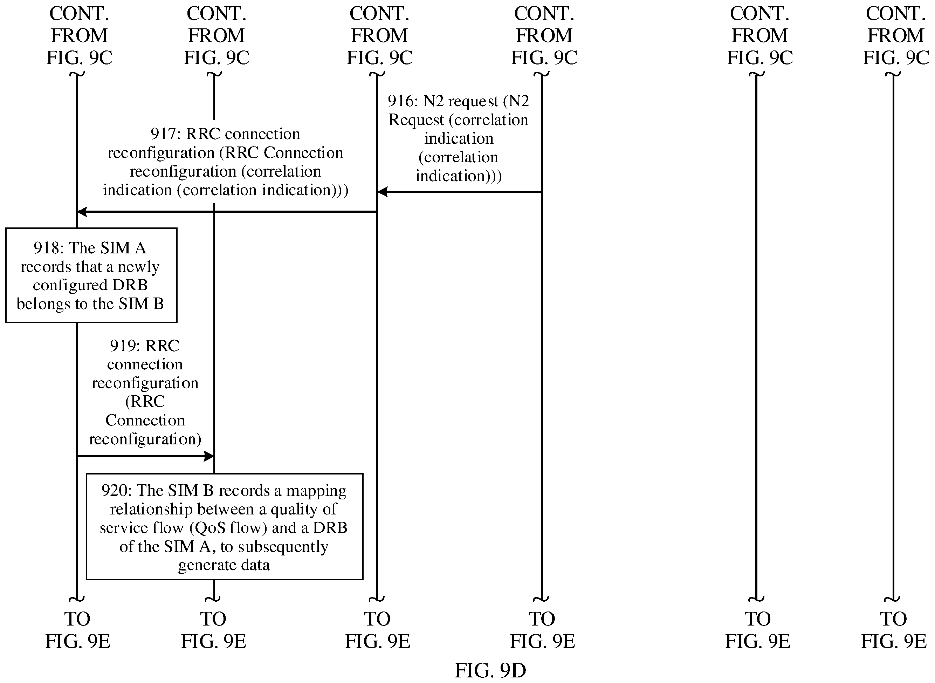

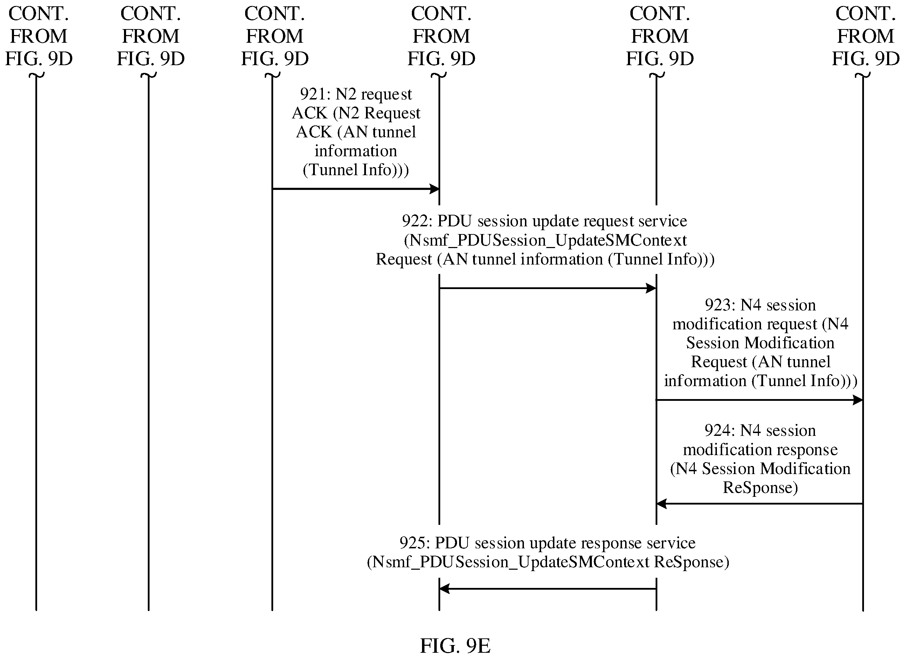

Based on the foregoing embodiment, an embodiment of this application further provides another specific example. In this example, an example in which a communications apparatus is UE is used for description. In this example, a SIM 1 supported by the UE is shown as a SIM A, and a SIM 2 supported by the UE is shown as a SIM B. The SIM A corresponds to a SIM card A, and the SIM B corresponds to a SIM card B. An example in which a network device that serves the SIM card A and the SIM card B of the UE is a gNB, a mobility management entity that serves the SIM card A and the SIM card B of the UE is a same AMF, and a session management function network element and a user plane function network element that serve the SIM card B of the UE are respectively an SMF-B and a UPF-B is used for description. In this example, a RAT standard supported by the UE for the SIM A is higher than a RAT standard supported by the UE for the SIM B. For example, the SIM A supports 5G, and the SIM B supports 4G; or the SIM A supports 4G, and the SIM B supports 3G. For details, refer to FIG. 9A to FIG. 9E. A procedure of the example may include the following steps.

Step 900: The SIM A is registered with 5G.

Step 901: The SIM B generates a registration request (that is, the third registration request in the foregoing embodiment), and sends the registration (Registration) request to the SIM A.

Specifically, the registration request includes an identifier 5G-GUTI-B of the SIM card B.

Step 902: If the SIM A is in an idle state, the SIM A first enters a connected state, and sends the registration request of the SIM B to the AMF by using an uplink NAS transport message.

Specifically, an uplink NAS transport (UL NAS transport) message includes indication information. The indication information may be an identifier of the SIM B, or indication information used to notify the AMF that the NAS is used to transfer a NAS message of another SIM.

For example, the SIM A sends the uplink NAS transport message to the AMF through the gNB.

Step 903: The AMF records a correlation relationship between the SIM card A and the SIM card B, and performs a subsequent registration process, where the SIM A is a primary card.

Step 904 and step 905: The AMF sends a registration accept (Registration accept) message to the SIM A, and the SIM A forwards the registration accept message to the SIM B.

Specifically, the AMF sends a downlink NAS transport (DL NAS transport) message to the SIM A through the gNB, to send the registration accept message.

Step 906: The SIM B completes session establishment by using the SIM A.

Specifically, the SIM B establishes a PDU session in 5G through the SIM A.

Step 907 to step 909: When receiving downlink data (Downlink Data) sent to the SIM B, and determining that a data channel corresponding to the downlink data does not exist, the UPF-B sends a data notification (Data Notification) message to an SMF (namely, the SMF-B) that serves the SIM B, and the SMF-B sends a request to the AMF. In step 909, the SMF-B sends a request to the AMF by using an N1N2 transfer message (Namf_Communication_N1N2MessageTransfer).

Step 910: The AMF-A obtains a connection status of the SIM A associated with the SIM B, and if the SIM A is in a connected state, performs subsequent steps, otherwise, notifies the AMF to page the SIM A, and performs subsequent steps after the SIM A is in the connected state.

Step 911 and step 912: The AMF-A sends a NAS message: a paging notification (paging notification) message to the SIM A through a NAS channel of the SIM A, where the paging notification message carries the identifier (for example, 5G-GUTI B) of the SIM B. Optionally, the paging notification message may further carry indication information for paging another card (SIM card). After receiving the NAS message, the SIM A forwards the NAS message to the SIM B.

Step 913 and step 914: The SIM B sends a service request (Service Request) message to the AMF-A through the SIM A. Specifically, the SIM B first sends the service request message to the SIM A, and then the SIM A carries the service request message of the SIM card B and an identifier of the SIM card B in a NAS message sent to the AMF-A, and optionally further carries a correlation indication.

The NAS message sent by the SIM A to the AMF-A may be an uplink NAS transport (UL NAS transport) message. The service request message may carry the identifier of the SIM card B, that is, 5G-GUTI B.

Step 915-1: The AMF sends a request to the SMF-B, to request to restore a core network transmission channel for the SIM B.

Specifically, the AMF may send the request to the SMF-B by using a PDU session update request (Nsmf_PDUSession_UpdateSMContext Request).

Step 915-2: The SMF-B sends a request to the UPF-B, to request to restore the core network transmission channel for the SIM B.

Specifically, the SMF-B may send the request to the UPF-B by using an N4 session modification request (N4 Session Modification Request).

Step 915-3: The UPF-B sends a response message, where the response message may carry information about a tunnel (tunnel) that is allocated by the UPF-B to the SIM B and that is used for downlink transmission.

Specifically, the UPF-B may send the response message to the SMF-B by using an N4 session modification response (N4 Session Modification Response).

Step 915-4: The SMF-B sends the tunnel information to the AMF.

Specifically, the SMF-B sends the tunnel information to the AMF by using a PDU session update response (Nsmf_PDU Session_UpdateSMContext ReSponse).

Step 916: The AMF sends information about the UPF-B to the gNB. Indication information is carried in a message sent by the AMF to the gNB. The indication information may be the identifier of the SIM card B, or may be indication information used to notify the gNB that the data bearer is used to transmit other SIM data.

Specifically, the AMF-A sends information about the UPF to the gNB by using an N2 request (N2 Request).

Step 917: The gNB configures a data radio bearer (data radio bearer, DRB) for the SIM A, where the DRB is used to transmit data of the SIM B.

Specifically, the gNB sends configuration information (that is, the configuration of the first radio bearer in the foregoing embodiment) to the SIM A by using an RRC connection reconfiguration (RRC Connection reconfiguration) message, so that the gNB configures the data radio bearer (data radio bearer, DRB) for the SIM A.

Indication information is carried in the RRC connection reconfiguration message. The indication information may be the identifier of the SIM B, or may be indication information used to notify the UE that the DRB is used to transmit other SIM data.

Step 918: The SIM A locally records that the DRB is used to transmit data of the SIM B.

That is, the SIM A records that a newly configured DRB belongs to the SIM B.

Step 919 and step 920: The SIM A forwards the RRC connection reconfiguration message to the SIM B, and the SIM B establishes (and records) a correspondence between the DRB and a quality of service flow (QoS flow) of the SIM B.

Specifically, the correspondence is used to subsequently generate data.

Step 921: The gNB sends, to the AMF, tunnel information used by the gNB to transmit the data of the SIM B.

Specifically, the gNB sends the tunnel information (AN tunel info) to the AMF by using an N2 request ACK (N2 Request ACK).

Step 922: The AMF forwards the tunnel information to the SMF-B.

Specifically, the AMF forwards the tunnel information to the SMF-B by using a PDU session update request (Nsmf_PDU Session_UpdateSMContext Request) service.

Step 923: The SMF-B forwards the tunnel information to the UPF-B, to establish a tunnel connection between the UPF-B and the gNB.

Specifically, the SMF-B forwards the tunnel information to the UPF-B by using the N4 session modification request (N4 Session Modification Request).

Step 924 and step 925: The UPF-B and the SMF-B separately send a response message.

Specifically, the UPF-B sends the response message to the SMF-B by using the N4 session modification response (N4 Session Modification Response), and the SMF-B sends the response message to the AMF by using a PDU session update response (Nsmf_PDU Session_UpdateSMContext Response) service.

Further, after the SIM A of the UE is configured with the DRB for transmitting the data of the SIM card B, when the data of the SIM B needs to be transmitted through the SIM A, a specific transmission process may also be shown in FIG. 8. For the specific process, refer to the related description in FIG. 8. Details are not described herein again.

In the foregoing example, when the two SIMs belong to a same carrier, and RATs supported by the communications apparatus for the two SIMs are different, both the two SIMs may camp on a high-standard network, and the two SIMs simultaneously receive and send data. For example, when two SIM cards are installed in the communications apparatus, one SIM card supports 4G, and the other SIM card supports 5G, in the foregoing communications method, a link supporting 4G can be enabled to receive and send data by using a link supporting 5G, so that both SIM cards can support 5G, and data can be transmitted and received by using the two SIM cards. In this way, a current problem that a user can use only one SIM card to perform a service is solved, and user experience is improved.

It should be noted that, in the foregoing embodiments, descriptions are all based on that PLMNs of the two SIMs are the same. It should be understood that the communications method provided in this embodiment of this application is also applicable to a case in which the two SIMs belong to different PLMNs. Specifically, identifiers of respective PLMNs may be carried in identifiers of the SIMs in a registration process, so that a network device can identify the PLMNs. Then, an AMF 1 that serves the SIM 1 may find, based on an identifier of a PLMN of the SIM 2, an AMF 2 that serves the SIM 2. Similarly, the AMF 2 may find the AMF 1 based on an identity of a PLMN of the SIM 1, so that the AMF 1 and the AMF 2 may exchange information according to the procedure of the foregoing method.

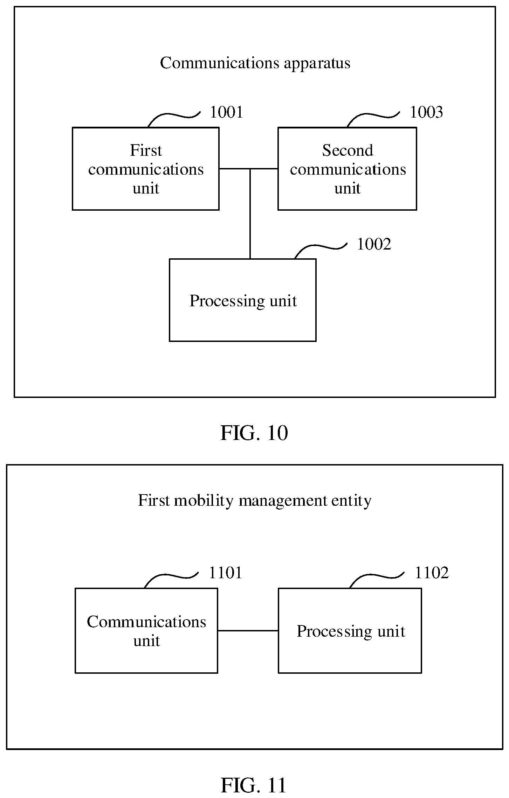

Based on the foregoing embodiments, this application further provides a communications apparatus. The communications apparatus supports subscriber identity modules SIM 1 and SIM 2, and the communications apparatus is in a connected state by using the SIM 1. The communications apparatus may be configured to implement the communications method shown in FIG. 5. As shown in FIG. 10, the communications apparatus may include a first communications unit 1001 and a processing unit 1002, and optionally, may further include a second communications unit 1003. In this embodiment, the first communications unit 1001 may correspond to a communications module supporting a SIM card 1, and the second communications unit 1003 may correspond to a communications module supporting a SIM card 2. To be specific, the first communications unit 1001 obtains information such as a user identity from the SIM card 1, and communicates with a corresponding network device by using the information. The second communications unit 1003 obtains information such as a user identity from the SIM card 2, and communicates with a corresponding network device by using the information.

The communications apparatus receives a first paging notification message from a first mobility management entity through the first communications unit 1001. The first paging notification message includes an identifier of the SIM card 2. The first mobility management entity provides a service for the SIM card 1.

The communications apparatus sends a service request of the SIM card 2 and the identifier of the SIM card 2 to the first mobility management entity.

The processing unit 1002 is configured to control the first communications unit 1001 to receive and send data.

Home public land mobile networks PLMNs of the SIM card 1 and the SIM card 2 are the same.

For example, the first paging notification message is forwarded from the first communications unit 1001 to the second communications unit 1003.

The service request is sent from the second communications unit 1003 to the first communications unit 1001.

The service request of the SIM card 2 and the identifier of the SIM card 2 are sent to the first mobility management entity through the first communications unit 1001.

Specifically, the first paging notification message is forwarded from the first communications unit 1001 to the second communications unit 1003.

The service request of the SIM card 2 and the identifier of the SIM card 2 are sent to the first mobility management entity through the second communications unit 1003.

In an implementation, the processing unit 1002 is further configured to: receive a configuration of a first radio bearer from a first network device by using the first communications unit 1001, where the first radio bearer is used for data transmission of the SIM card 2; and
transmit, through the first communications unit 1001 and the first network device by using the first radio bearer, data belonging to the SIM card 2.

Specifically, the processing unit 1002 is further configured to: store information about the first radio bearer through the SIM card 1, and establish a correspondence between the first radio bearer and a data flow of the SIM card 2 by using the second communications unit 1003.

In a specific implementation, when transmitting, through the first communications unit 1001 and the first network device by using the first radio bearer, data belonging to the SIM card 2, the processing unit 1002 is specifically configured to:
receive first data from the first network device based on the first bearer through the first communications unit 1001;
determine that the first data belongs to the SIM card 2; and
send the first data from the first communications unit 1001 to the second communications unit 1003.

In another specific implementation, that the processing unit 1002 transmits, through the first communications unit 1001 and the first network device by using the first radio bearer, data belonging to the SIM card 2 further includes:
obtaining second data through the second communications unit 1003;
determining, by using the first communications unit 1001, the first radio bearer for transmitting the second data; and
sending the second data to the first network device based on the first radio bearer through the first communications unit 1001.

For example, the processing unit 1002 sends a first registration request to the first mobility management entity through the first communications unit 1001. The first registration request includes an identifier of the SIM card 1 and the identifier of the SIM card 2.

The processing unit 1002 sends a second registration request to a second mobility management entity through the second communications unit 1003. The second registration request includes the identifier of the SIM card 1 and the identifier of the SIM card 2.

In an example, a first message is sent to the first mobility management entity through the first communications unit 1001. The first message includes a third registration request of the SIM card 2 and the identifier of the SIM card 2.

A second message is received from the first mobility management entity through the first communications unit 1001. The second message indicates that registration of the SIM card 2 is completed.

Based on the foregoing embodiment, this application further provides a first mobility management entity. The first mobility management entity may be configured to implement the communications method shown in FIG. 5. Refer to FIG. 11. The first mobility management entity may include a communications unit 1101 and a processing unit 1102.

The communications unit 1101 is configured to: send a first paging notification message to a subscriber identity module SIM 1 of a communications apparatus, where the first paging notification message includes an identifier of a SIM card 2, the communications apparatus supports a SIM card 1 and the SIM card 2, a SIM A corresponds to a SIM card A, a SIM B corresponds to a SIM card B, the communications apparatus is in a connected state by using the SIM 1, and the first mobility management entity provides a service for the SIM card 1; and
receive a service request of the SIM card 2 and the identifier of the SIM card 2 from the communications apparatus.

The processing unit 1102 is configured to control the communications unit 1101 to receive and send data.

Home public land mobile networks PLMNs of the SIM card 1 and the SIM card 2 are the same.

For example, the communications unit 1101 is further configured to:
receive the service request of the SIM card 2 and the identifier of the SIM card 2 from the SIM 1 of the communications apparatus.

Specifically, the communications unit 1101 is further configured to:
receive the service request of the SIM card 2 and the identifier of the SIM card 2 from the SIM 2 of the communications apparatus.

In an example, the communications unit 1101 is further configured to:
send the service request of the SIM card 2 of the communications apparatus to a second mobility management entity, where the second mobility management entity provides a service for the SIM card 2 of the communications apparatus.

In an optional implementation, the communications unit 1101 is further configured to:
receive information about a user plane function network element from the second mobility management entity, where the second mobility management entity and the UPF provide services for the SIM card 2 of the communications apparatus; and
send the information about the user plane function network element and an identifier of the SIM 2 to a first network device.

Specifically, the communications unit 1101 is further configured to receive a first registration request from the SIM 1 of the communications apparatus. The first registration request includes an identifier of the SIM card 1 and the identifier of the SIM card 2.

The processing unit 1102 is further configured to store a correlation relationship between the SIM 1 and the SIM 2.

For example, the communications unit 1101 is further configured to receive a first message from the SIM 1 of the communications apparatus. The first message includes a third registration request of the SIM card 2 and the identifier of the SIM card 2.

The processing unit 1102 is further configured to store a correlation relationship between the SIM card 1 and the SIM card 2.

The communications unit 1101 is further configured to send a second message to the SIM 1 of the communications apparatus. The second message indicates that registration of the SIM card 2 is completed.

In an example, the communications unit 1101 is further configured to receive a status query message from the second mobility management entity. The status query message is used to query a connection status of a first session management function network element SMF, and the status query message includes the identifier of the SIM card 1 and the identifier of the SIM card 2.

Based on the foregoing embodiments, this application further provides a communications apparatus. The communications apparatus supports subscriber identity modules SIM 1 and SIM 2. A SIM A corresponds to a SIM card A, and a SIM B corresponds to a SIM card B. The communications apparatus is in a connected state by using the SIM 1. The communications apparatus may be configured to implement the communications method shown in FIG. 6. Similarly, as shown in FIG. 10, the communications apparatus may include the first communications unit 1001 and the processing unit 1002, and optionally, may further include the second communications unit 1003. In this embodiment, the first communications unit 1001 may correspond to a communications module supporting a SIM card 1, and the second communications unit 1003 may correspond to a communications module supporting a SIM card 2. To be specific, the first communications unit 1001 obtains information such as a user identity from the SIM card 1, and communicates with a corresponding network device by using the information. The second communications unit 1003 obtains information such as a user identity from the SIM card 2, and communicates with a corresponding network device by using the information.

The communications apparatus receives a configuration of a first radio bearer from a first network device through the first communications unit 1001, where the first radio bearer is used for data transmission of the SIM card 2; and
transmits, through the SIM 1 and the first network device by using the first radio bearer, data belonging to the SIM card 2.

The processing unit 1002 is configured to control the first communications unit 1001 to receive and send data.

Home public land mobile networks PLMNs of the SIM card 1 and the SIM card 2 are the same.

For example, the processing unit 1002 is further configured to: store information about the first radio bearer through the SIM card 1, and establish a correspondence between the first radio bearer and a data flow of the SIM card 2 by using the first communications unit 1001.

Specifically, when transmitting, through the first communications unit 1001 and the first network device by using the first radio bearer, data belonging to the SIM card 2, the processing unit 1002 is specifically configured to:
receive first data from the first network device by using the first bearer through the first communications unit 1001;
determine that the first data belongs to the SIM card 2; and
send the first data from the first communications unit 1001 to the second communications unit 1003.

Specifically, when transmitting, through the first communications unit 1001 and the first network device by using the first radio bearer, data belonging to the SIM card 2, the processing unit 1002 is specifically configured to:
obtain second data through the second communications unit 1003;
determine, by using the first communications unit 1001, the first radio bearer for transmitting the second data; and
send the second data to the first network device based on the first radio bearer through the first communications unit 1001.

In an implementation, a first registration request is sent to a first mobility management network element mobility management entity through the first communications unit 1001. The first registration request includes the identifier of the SIM card 1 and the identifier of the SIM card 2.

A second registration request is sent to a second mobility management entity through the second communications unit 1003. The second registration request includes the identifier of the SIM card 1 and the identifier of the SIM card 2.

In an example, a first message is sent to the first mobility management network element mobility management entity through the first communications unit 1001. The first message includes a third registration request of the SIM card 2 and the identifier of the SIM card 2.

A second message is received from the first mobility management entity through the first communications unit 1001. The second message indicates that registration of the SIM card 2 is completed.

Specifically, the second communications unit 1003 sends a service request of the SIM card 2 to the first communications unit 1001.

The service request of the SIM card 2 and the identifier of the SIM card 2 are sent to the first mobility management entity through the first communications unit 1001.

It should be noted that, in embodiments of this application, division into units is an example, and is merely logical function division. During actual implementation, another division manner may be used. Function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

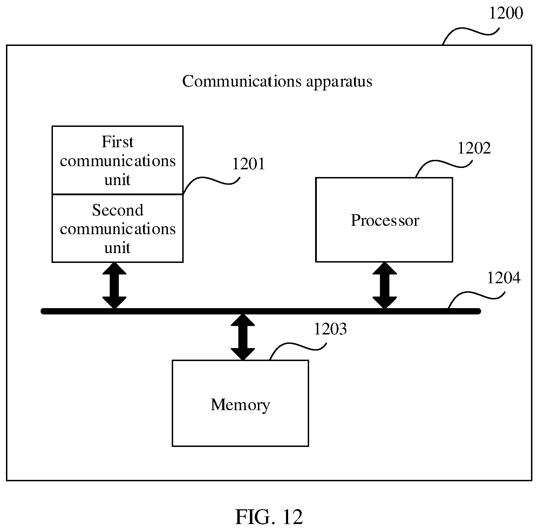

Based on the foregoing embodiments, this application further provides a communications apparatus. The communications apparatus supports a SIM card 1 and a SIM card 2, a SIM 1 corresponds to the SIM card 1, and a SIM 2 corresponds to the SIM card 2. The communications apparatus is in a connected state by using the SIM 1. The communications apparatus may be configured to implement the communications method shown in FIG. 5 or FIG. 6. Refer to FIG. 12. The communications apparatus may include a communications unit 1201 and a processor 1202. The communications unit 1201 may include a first communications unit and a second communications unit. The first communications unit corresponds to a communications module supporting the SIM card 1, and the second communications unit may correspond to a communications module supporting the SIM card 2.

The processor 1202 may be a central processing unit (central processing unit, CPU), a network processor (network processor, NP), or a combination of a CPU and an NP. The processor 1202 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 1202 may implement the foregoing functions by using hardware or certainly by using hardware executing corresponding software.

The communications unit 1201 and the processor 1202 are connected to each other. Optionally, the communications unit 1201 and the processor 1202 are connected to each other through a bus 1204. The bus 1204 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 12, but this does not mean that there is only one bus or only one type of bus.

Optionally, the communications apparatus may further include a memory 1203. The memory 1203 is configured to store a program and the like. Specifically, the program may include program code, and the program code includes computer operation instructions. The memory 1203 may include a RAM, and may further include a non-volatile memory (non-volatile memory), for example, at least one magnetic disk memory. The processor 1202 executes the application program stored in the memory 1203, to implement the foregoing function, so as to implement the communications method shown in FIG. 5 or FIG. 6.

In an embodiment, when the communications apparatus implements the communications method shown in FIG. 5, the communications unit 1201 may implement receiving and sending operations performed by the communications apparatus in the embodiment shown in FIG. 5. Specifically, the first communications unit may implement receiving and sending operations performed by using the SIM 1, and the second communications unit may implement receiving and sending operations performed by using the SIM 2. The processor 1202 may implement other operations except the receiving and sending operations performed by the communications apparatus in the embodiment shown in FIG. 5. For detailed related descriptions, refer to related descriptions in the foregoing embodiments. Details are not described herein again.

In another embodiment, when the communications apparatus implements the communications method shown in FIG. 6, the communications unit 1201 may implement receiving and sending operations performed by the communications apparatus in the embodiment shown in FIG. 6. Specifically, the first communications unit may implement receiving and sending operations performed by using the SIM 1, and the second communications unit may implement receiving and sending operations performed by using the SIM 2. The processor 1202 may implement other operations except the receiving and sending operations performed by the communications apparatus in the embodiment shown in FIG. 6. For detailed related descriptions, refer to related descriptions in the foregoing embodiments. Details are not described herein again.

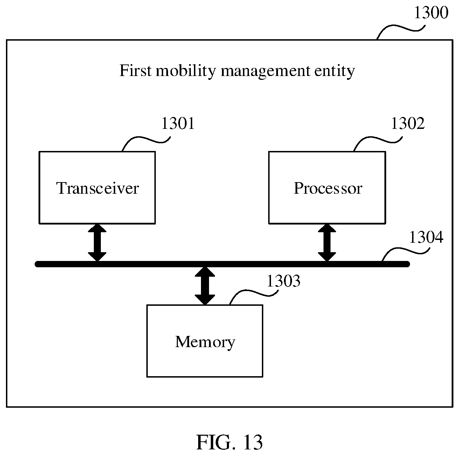

Based on the foregoing embodiment, this application further provides a first mobility management entity. The first mobility management entity may be configured to implement the communications method shown in FIG. 5. Refer to FIG. 13. The first mobility management entity may include a transceiver 1301 and a processor 1302.

The processor 1302 may be a central processing unit (central processing unit, CPU), a network processor (network processor, NP), or a combination of a CPU and an NP. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 1302 may implement the foregoing functions by using hardware or certainly by using hardware executing corresponding software.

The transceiver 1301 and the processor 1302 are connected to each other. Optionally, the transceiver 1301 and the processor 1302 are connected to each other through a bus 1304. The bus 1304 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 13, but this does not mean that there is only one bus or only one type of bus.

Optionally, the first mobility management entity may further include a memory 1303. The memory 1303 is configured to store a program and the like. Specifically, the program may include program code, and the program code includes computer operation instructions. The memory 1303 may include a RAM, and may further include a non-volatile memory (non-volatile memory), for example, at least one magnetic disk memory. The processor 1302 executes the application program stored in the memory 1303, to implement the foregoing function, so as to implement the communications method shown in FIG. 4.

In an embodiment, when the first mobility management entity implements the communications method shown in FIG. 5, the transceiver 1301 may implement receiving and sending operations performed by the first mobility management entity in the embodiment shown in FIG. 5. The processor 1301 may implement other operations except the receiving and sending operations performed by the first mobility management entity in the embodiment shown in FIG. 5. For detailed related descriptions, refer to related descriptions in the foregoing embodiments. Details are not described herein again.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or the processor of any other programmable data processing device generate an apparatus for implementing a specific function in one or more processes in the flowcharts and/or in one or more blocks in the block diagrams.

These computer program instructions may be saved in a computer-readable memory that can indicate the computer or any other programmable data processing device to work in a specific manner, so that the instructions saved in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A communications method, wherein the method is applicable to a communications apparatus, the communications apparatus supports a SIM card 1 and a SIM card 2, the communications apparatus comprises a first communications module SIM 1 and a second communications module SIM 2, the SIM 1 corresponds to the SIM card 1, the SIM 2 corresponds to the SIM card 2, and the method comprises:
when the SIM 1 is in a connected state, receiving (501) a first paging notification message from a first mobility management entity through the SIM 1, wherein the first paging notification message comprises an identifier of the SIM card 2, and the SIM card 1 is served by the first mobility management entity; and
sending (502) a service request of the SIM card 2 and the identifier of the SIM card 2 to the first mobility management entity.

2. The method according to claim 1, wherein the method further comprises:
forwarding the first paging notification message from the SIM 1 to the SIM 2;
sending the service request from the SIM 2 to the SIM 1; and
sending the service request of the SIM card 2 and the identifier of the SIM card 2 to the first mobility management entity through the SIM 1.

3. The method according to claim 1, wherein the method further comprises:
forwarding the first paging notification message from the SIM 1 to the SIM 2; and
sending the service request of the SIM card 2 and the identifier of the SIM card 2 to the first mobility management entity through the SIM 2.

4. The method according to any one of claims 1 to 3, wherein the method further comprises:
receiving (601) a configuration of a first radio bearer from a first network device through the SIM 1, wherein the first radio bearer is used for data transmission of the SIM card 2; and
transmitting (602), through the SIM 1 and the first network device by using the first radio bearer, data belonging to the SIM card 2.

5. The method according to claim 4, wherein the method further comprises:
storing information about the first radio bearer through the SIM 1; and
establishing a correspondence between the first radio bearer and a data flow of the SIM card 2 through the SIM 2.

6. The method according to claim 4 or 5, wherein the transmitting, through the SIM 1 and the first network device by using the first radio bearer, data belonging to the SIM card 2 comprises:
receiving first data from the first network device based on the first bearer through the SIM 1;
determining that the first data belongs to the SIM card 2; and
sending the first data from the SIM 1 to the SIM 2.

7. The method according to any one of claims 4 to 6, wherein the transmitting, through the SIM 1 and the first network device by using the first radio bearer, data belonging to the SIM card 2 further comprises:
obtaining second data through the SIM 2;
determining, by using the SIM **1,** the first radio bearer for transmitting the second data; and
sending the second data to the first network device based on the first radio bearer through the SIM 1.

8. The method according to any one of claims 1 to 7, wherein the method further comprises:
sending a first registration request to the first mobility management entity through the SIM 1, wherein the first registration request comprises an identifier of the SIM card 1 and the identifier of the SIM card 2; and
sending a second registration request to a second mobility management entity through the SIM 2, wherein the second registration request comprises the identifier of the SIM card 1 and the identifier of the SIM card 2.

9. The method according to any one of claims 1 to 7, wherein the method further comprises:
sending a first message to the first mobility management entity through the SIM 1, wherein the first message comprises a third registration request of the SIM card 2 and the identifier of the SIM card 2; and
receiving a second message from the first mobility management entity through the SIM 1, wherein the second message indicates that registration of the SIM card 2 is completed.

10. The method according to any one of claims 1 to 9, wherein home public land mobile networks PLMNs of the SIM card 1 and the SIM card 2 are the same.

11. A communications method, wherein the method is applicable to a first mobility management entity, and the method comprises:
obtaining a connection status of a first communications module SIM 1 supported by a communications apparatus and if the SIM 1 is in a connected state, sending (501) a first paging notification message to the first communications module SIM 1 of the communications apparatus, wherein the communications apparatus supports a SIM card 1 and a SIM card 2, the communications apparatus comprises the first communications module SIM 1 and a second communications module SIM 2, the SIM 1 corresponds to the SIM card 1, the SIM 2 corresponds to the SIM card 2, the first paging notification message comprises an identifier of the SIM card 2, and the first mobility management entity provides a service for the SIM card 1; and
receiving (502) a service request of the SIM card 2 and the identifier of the SIM card 2.

12. The method according to claim 11, wherein the method further comprises:
receiving the service request and the identifier of the SIM card 2 from the SIM 1 of the communications apparatus.

13. The method according to claim 11, wherein the method further comprises:
receiving the service request and the identifier of the SIM card 2 from the SIM 2 of the communications apparatus.

14. The method according to any one of claims 11 to 13, wherein the method further comprises:
sending the service request of the SIM card 2 of the communications apparatus to a second mobility management entity, wherein the second mobility management entity provides a service for the SIM card 2 of the communications apparatus.

15. The method according to any one of claims 11 to 14, wherein the method further comprises:
receiving information about a user plane function network element from the second mobility management entity, wherein the second mobility management entity and the UPF provide services for the SIM card 2 of the communications apparatus; and
sending the information about the user plane function network element and the identifier of the SIM card 2 to a first network device.

16. The method according to any one of claims 11 to 15, wherein home public land mobile networks PLMNs of the SIM card 1 and the SIM card 2 are the same.

17. A communications apparatus (1200), comprising a memory (1203), a processor (1202), a first communications module SIM 1, and a second communications module SIM 2, wherein the SIM 1 corresponds to a SIM card 1, the SIM 2 corresponds to a SIM card 2, the memory (1203) stores instructions, which when excecuted by the processor (1202) cause the communications apparatus (1200) to perform the method according to any one of claims 1 to 10.

## Patentansprüche

1. Kommunikationsverfahren, wobei das Verfahren auf eine Kommunikationsvorrichtung anwendbar ist, die Kommunikationsvorrichtung eine SIM-Karte 1 und eine SIM-Karte 2 trägt, die Kommunikationsvorrichtung ein erstes Kommunikationsmodul SIM 1 und ein zweites Kommunikationsmodul SIM 2 umfasst, das SIM 1 der SIM-Karte 1 entspricht, das SIM 2 der SIM-Karte 2 entspricht, und das Verfahren Folgendes umfasst:
wenn sich das SIM 1 in einem Verbindungszustand befindet, Empfangen (501) einer ersten Paging-Benachrichtigungsmeldung von einer ersten Mobilitätsverwaltungseinheit über das SIM 1,
wobei die erste Paging-Benachrichtigungsmeldung eine Kennung der SIM-Karte 2 umfasst und die SIM-Karte 1 von der ersten Mobilitätsverwaltungseinheit bedient wird, und
Senden (502) einer Dienstanforderung der SIM-Karte 2 und der Kennung der SIM-Karte 2 an die erste Mobilitätsverwaltungseinheit.

2. Verfahren nach Anspruch 1, wobei das Verfahren ferner Folgendes umfasst:
Weiterleiten der ersten Paging-Benachrichtigungsmeldung vom SIM 1 an das SIM 2;
Senden der Dienstanforderung vom SIM 2 an das SIM 1; und
Senden der Dienstanforderung der SIM-Karte 2 und der Kennung der SIM-Karte 2 an die erste Mobilitätsverwaltungseinheit über das SIM 1.

3. Verfahren nach Anspruch 1, wobei das Verfahren ferner Folgendes umfasst:
Weiterleiten der ersten Paging-Benachrichtigungsmeldung vom SIM 1 an das SIM 2; und
Senden der Dienstanforderung der SIM-Karte 2 und der Kennung der SIM-Karte 2 an die erste Mobilitätsverwaltungseinheit über das SIM 2.

4. Verfahren nach einem der Ansprüche 1 bis 3, wobei das Verfahren ferner Folgendes umfasst:
Empfangen (601) einer Konfiguration eines ersten Funkträgers von einem ersten Netzwerkgerät über das SIM 1,
wobei der erste Funkträger für die Datenübertragung der SIM-Karte 2 verwendet wird; und
Übertragen (602), durch das SIM 1 und das erste Netzwerkgerät unter Verwendung des ersten Funkträgers, von Daten, die zur SIM-Karte 2 gehören.

5. Verfahren nach Anspruch 4, wobei das Verfahren ferner Folgendes umfasst:
Speichern von Informationen über den ersten Funkträger über das SIM 1; und
Herstellen einer Übereinstimmung zwischen dem ersten Funkträger und einem Datenfluss der SIM-Karte 2 durch das SIM 2.

6. Verfahren nach Anspruch 4 oder 5, wobei das Übertragen, durch das SIM 1 und das erste Netzwerkgerät unter Verwendung des ersten Funkträgers, von Daten, die zur SIM-Karte 2 gehören, Folgendes umfasst:
Empfangen erster Daten vom ersten Netzwerkgerät auf der Grundlage des ersten Trägers durch das SIM 1;
Bestimmen, dass die ersten Daten zu der SIM-Karte 2 gehören; und
Senden der ersten Daten vom SIM 1 zum SIM 2.

7. Verfahren nach einem der Ansprüche 4 bis 6, wobei das Übertragen, durch das SIM 1 und das erste Netzwerkgerät unter Verwendung des ersten Funkträgers, von Daten, die zur SIM-Karte 2 gehören, ferner Folgendes umfasst:
Erhalten zweiter Daten durch das SIM 2;
Bestimmen, unter Verwendung des SIM 1, des ersten Funkträgers zum Übertragen der zweiten Daten; und
Senden der zweiten Daten an das erste Netzwerkgerät auf der Grundlage des ersten Funkträgers durch das SIM 1.

8. Verfahren nach einem der Ansprüche 1 bis 7, wobei das Verfahren ferner Folgendes umfasst:
Senden einer ersten Registrierungsanforderung an die erste Mobilitätsverwaltungseinheit über die SIM-Karte 1, wobei die erste Registrierungsanforderung eine Kennung der SIM-Karte 1 und die Kennung der SIM-Karte 2 umfasst; und
Senden einer zweiten Registrierungsanforderung an eine zweite Mobilitätsverwaltungseinheit durch das SIM 2, wobei die zweite Registrierungsanforderung die Kennung der SIM-Karte 1 und die Kennung der SIM-Karte 2 umfasst.

9. Verfahren nach einem der Ansprüche 1 bis 7, wobei das Verfahren ferner Folgendes umfasst:
Senden einer ersten Nachricht an die erste Mobilitätsverwaltungseinheit durch das SIM 1, wobei die erste Nachricht eine dritte Registrierungsanforderung der SIM-Karte 2 und die Kennung der SIM-Karte 2 umfasst; und
Empfangen einer zweiten Nachricht von der ersten Mobilitätsverwaltungseinheit durch das SIM 1, wobei die zweite Nachricht anzeigt, dass die Registrierung der SIM-Karte 2 abgeschlossen ist.

10. Verfahren nach einem der Ansprüche 1 bis 9, wobei die heimischen öffentlichen Mobilfunknetze (PLMN) der SIM-Karte 1 und der SIM-Karte 2 identisch sind.

11. Kommunikationsverfahren, wobei das Verfahren auf eine erste Mobilitätsverwaltungseinheit anwendbar ist und das Verfahren Folgendes umfasst:
Erhalten eines Verbindungsstatus eines ersten Kommunikationsmoduls SIM 1, das von einer Kommunikationsvorrichtung unterstützt wird, und ob sich das SIM 1 in einem Verbindungszustand befindet,
Senden (501) einer ersten Paging-Benachrichtigungsmeldung an das erste Kommunikationsmodul SIM 1 der Kommunikationsvorrichtung, wobei die Kommunikationsvorrichtung eine SIM-Karte 1 und eine SIM-Karte 2 unterstützt, die Kommunikationsvorrichtung das erste Kommunikationsmodul SIM 1 und ein zweites Kommunikationsmodul SIM 2 umfasst, das SIM 1 der SIM-Karte 1 entspricht, das SIM 2 der SIM-Karte 2 entspricht,
die erste Paging-Benachrichtigungsmeldung eine Kennung der SIM-Karte 2 umfasst und die erste Mobilitätsverwaltungseinheit einen Dienst für die SIM-Karte 1 bereitstellt; und
Empfangen (502) einer Dienstanforderung der SIM-Karte 2 und der Kennung der SIM-Karte 2.

12. Verfahren nach Anspruch 11, wobei das Verfahren ferner Folgendes umfasst:
Empfangen der Dienstanforderung und der Kennung der SIM-Karte 2 von dem SIM 1 der Kommunikationsvorrichtung.

13. Verfahren nach Anspruch 11, wobei das Verfahren ferner Folgendes umfasst:
Empfangen der Dienstanforderung und der Kennung der SIM-Karte 2 von dem SIM 2 der Kommunikationsvorrichtung.

14. Verfahren nach einem der Ansprüche 11 bis 13, wobei das Verfahren ferner Folgendes umfasst:
Senden der Dienstanforderung der SIM-Karte 2 der Kommunikationsvorrichtung an eine zweite Mobilitätsverwaltungseinheit, wobei die zweite Mobilitätsverwaltungseinheit einen Dienst für die SIM-Karte 2 der Kommunikationsvorrichtung bereitstellt.

15. Verfahren nach einem der Ansprüche 11 bis 14, wobei das Verfahren ferner Folgendes umfasst:
Empfangen von Informationen über ein Benutzerebenenfunktions-Netzwerkelement von der zweiten Mobilitätsverwaltungseinheit, wobei die zweite Mobilitätsverwaltungseinheit und die UPF Dienste für die SIM-Karte 2 der Kommunikationsvorrichtung bereitstellen; und
Senden der Informationen über das Benutzerebenenfunktions-Netzwerkelement und der Kennung der SIM-Karte 2 an ein erstes Netzwerkgerät.

16. Verfahren nach einem der Ansprüche 11 bis 15, wobei die heimischen öffentlichen Mobilfunknetze (PLMN) der SIM-Karte 1 und der SIM-Karte 2 identisch sind.

17. Kommunikationsvorrichtung (1200), die einen Speicher (1203), einen Prozessor (1202), ein erstes Kommunikationsmodul SIM 1 und ein zweites Kommunikationsmodul SIM 2 umfasst, wobei das SIM 1 einer SIM-Karte 1 entspricht, das SIM 2 einer SIM-Karte 2 entspricht, der Speicher (1203) Befehle speichert, die, wenn sie vom Prozessor (1202) ausgeführt werden, die Kommunikationsvorrichtung (1200) veranlassen, das Verfahren nach einem der Ansprüche 1 bis 10 durchzuführen.

## Revendications

1. Procédé de communication, dans lequel le procédé est applicable à un appareil de communication, l'appareil de communication prend en charge une carte SIM 1 et une carte SIM 2, l'appareil de communication comprend un premier module de communication SIM 1 et un second module de communication SIM 2, le SIM 1 correspond à la carte SIM 1, le SIM 2 correspond à la carte SIM 2, et le procédé comprend :
lorsque le SIM 1 est dans un état connecté, la réception (501) d'un premier message de notification de radiomessagerie à partir d'une première entité de gestion de la mobilité par l'intermédiaire du SIM 1, dans lequel le premier message de notification de radiomessagerie comprend un identificateur de la carte SIM 2, et la carte SIM 1 est desservie par la première entité de gestion de la mobilité ; et
l'envoi (502) d'une demande de service de la carte SIM 2 et de l'identificateur de la carte SIM 2 à la première entité de gestion de la mobilité.

2. Procédé selon la revendication 1, dans lequel le procédé comprend en outre :
la transmission du premier message de notification de radiomessagerie à partir du SIM 1 au SIM 2 ;
l'envoi de la demande de service à partir du SIM 2 au SIM 1 ; et
l'envoi de la demande de service de la carte SIM 2 et l'identificateur de la carte SIM 2 à la première entité de gestion de la mobilité par l'intermédiaire du SIM 1.

3. Procédé selon la revendication 1, dans lequel le procédé comprend en outre :
la transmission du premier message de notification de radiomessagerie à partir du SIM 1 au SIM 2 ; et
l'envoi de la demande de service de la carte SIM 2 et l'identificateur de la carte SIM 2 à la première entité de gestion de la mobilité par l'intermédiaire du SIM 2.

4. Procédé selon l'une quelconque des revendications 1 à 3, dans lequel le procédé comprend en outre :
la réception (601) d'une configuration d'un premier support radio à partir d'un premier dispositif de réseau par l'intermédiaire du SIM 1, dans lequel le premier support radio est utilisé pour la transmission de données de la carte SIM 2 ; et
la transmission (602), par l'intermédiaire du SIM 1 et du premier dispositif de réseau à l'aide du premier support radio, de données appartenant à la carte SIM 2.

5. Procédé selon la revendication 4, dans lequel le procédé comprend en outre :
le stockage d'informations relatives au premier support radio par l'intermédiaire du SIM 1 ; et
l'établissement d'une correspondance entre le premier support radio et un flux de données de la carte SIM 2 par l'intermédiaire du SIM 2.

6. Procédé selon la revendication 4 ou 5, dans lequel la transmission, par l'intermédiaire du SIM 1 et du premier dispositif de réseau à l'aide du premier support radio, de données appartenant à la carte SIM 2 comprend :
la réception de premières données à partir du premier dispositif de réseau sur la base du premier support par l'intermédiaire du SIM 1 ;
la détermination du fait que les premières données appartiennent à la carte SIM 2 ; et
l'envoi des premières données à partir du SIM 1 au SIM 2.

7. Procédé selon l'une quelconque des revendications 4 à 6, dans lequel la transmission, par l'intermédiaire du SIM 1 et du premier dispositif de réseau à l'aide du premier support radio, de données appartenant à la carte SIM 2 comprend en outre :
l'obtention de secondes données par l'intermédiaire du SIM 2 ;
la détermination, à l'aide du SIM 1, du premier support radio pour la transmission des secondes données ; et
l'envoi des secondes données au premier dispositif de réseau sur la base du premier support radio par l'intermédiaire du SIM 1.

8. Procédé selon l'une quelconque des revendications 1 à 7, dans lequel le procédé comprend en outre :
l'envoi d'une première demande d'enregistrement à la première entité de gestion de la mobilité par l'intermédiaire du SIM 1, dans lequel la première demande d'enregistrement comprend un identificateur de la carte SIM 1 et un identificateur de la carte SIM 2 ; et
l'envoi d'une deuxième demande d'enregistrement à une seconde entité de gestion de la mobilité par l'intermédiaire du SIM 2, dans lequel la deuxième demande d'enregistrement comprend l'identificateur de la carte SIM 1 et l'identificateur de la carte SIM 2.

9. Procédé selon l'une quelconque des revendications 1 à 7, dans lequel le procédé comprend en outre :
l'envoi d'un premier message à la première entité de gestion de la mobilité par l'intermédiaire du SIM 1, dans lequel le premier message comprend une troisième demande d'enregistrement de la carte SIM 2 et l'identificateur de la carte SIM 2 ; et
la réception d'un second message à partir de la première entité de gestion de la mobilité par l'intermédiaire du SIM 1, dans lequel le second message indique que l'enregistrement de la carte SIM 2 est terminé.

10. Procédé selon l'une quelconque des revendications 1 à 9, dans lequel des réseaux mobiles terrestres publics, PLMN, de rattachement de la carte SIM 1 et de la carte SIM 2 sont les mêmes.

11. Procédé de communication, dans lequel le procédé est applicable à une première entité de gestion de la mobilité, et le procédé comprend :
l'obtention d'un état de connexion d'un premier module de communication SIM 1 pris en charge par un appareil de communication et, si le SIM 1 est dans un état connecté, l'envoi (501) d'un premier message de notification de radiomessagerie au premier module de communication SIM 1 de l'appareil de communication, dans lequel l'appareil de communication prend en charge une carte SIM 1 et une carte SIM 2, l'appareil de communication comprend le premier module de communication SIM 1 et un second module de communication SIM 2, le SIM 1 correspond à la carte SIM 1, le SIM 2 correspond à la carte SIM 2, le premier message de notification de radiomessagerie comprend un identificateur de la carte SIM 2, et la première entité de gestion de la mobilité fournit un service pour la carte SIM 1 ; et
la réception (502) d'une demande de service de la carte SIM 2 et de l'identificateur de la carte SIM 2.

12. Procédé selon la revendication 11, dans lequel le procédé comprend en outre :
la réception de la demande de service et l'identificateur de la carte SIM 2 à partir du SIM 1 de l'appareil de communication.

13. Procédé selon la revendication 11, dans lequel le procédé comprend en outre :
la réception de la demande de service et l'identificateur de la carte SIM 2 à partir du SIM 2 de l'appareil de communication.

14. Procédé selon l'une quelconque des revendications 11 à 13, dans lequel le procédé comprend en outre :
l'envoi de la demande de service de la carte SIM 2 de l'appareil de communication à une seconde entité de gestion de la mobilité, dans lequel la seconde entité de gestion de la mobilité fournit un service pour la carte SIM 2 de l'appareil de communication.

15. Procédé selon l'une quelconque des revendications 11 à 14, dans lequel le procédé comprend en outre :
la réception d'informations relatives à un élément de réseau de fonction de plan d'utilisateur à partir de la seconde entité de gestion de la mobilité, dans lequel la seconde entité de gestion de la mobilité et l'UPF fournissent des services pour la carte SIM 2 de l'appareil de communication ; et
l'envoi des informations relatives à l'élément de réseau de fonction de plan d'utilisateur et de l'identificateur de la carte SIM 2 à un premier dispositif de réseau.

16. Procédé selon l'une quelconque des revendications 11 à 15, dans lequel des réseaux mobiles terrestres publics, PLMN, de rattachement de la carte SIM 1 et de la carte SIM 2 sont les mêmes.

17. Appareil de communication (1200), comprenant une mémoire (1203), un processeur (1202), un premier module de communication SIM 1, et un second module de communication SIM 2, dans lequel le SIM 1 correspond à une carte SIM 1, le SIM 2 correspond à une carte SIM 2, la mémoire (1203) stocke des instructions qui, lorsqu'elles sont exécutées par le processeur (1202), amènent l'appareil de communication (1200) à effectuer le procédé selon l'une quelconque des revendications 1 à 10.
